(19) Europäisches Patentamt
European Patent Office
Office européen des brevets

(11) **EP 0 939 499 A1**

(12) **EUROPEAN PATENT APPLICATION**
published in accordance with Art. 158(3) EPC

(43) Date of publication:
01.09.1999 Bulletin 1999/35

(51) Int. Cl.$^6$: **H04B 1/707**, H04B 1/10, H04J 13/00, H04L 27/18

(21) Application number: 98909729.0

(22) Date of filing: 18.03.1998

(86) International application number:
PCT/JP98/01141

(87) International publication number:
WO 98/57437 (17.12.1998 Gazette 1998/50)

(84) Designated Contracting States:
DE FR GB

(30) Priority: 09.06.1997 JP 18711697
10.12.1997 JP 36975397

(71) Applicant: Kuroyanagi, Noriyoshi
Higashiyamato-shi, Tokyo 207 (JP)

(72) Inventors:
• KUROYANAGI, Noriyoshi
Higashiyamato-shi Tokyo 207-0022 (JP)
• MATSUFUJI, Nobuya
Saga-shi Saga 840-0054 (JP)
• SUEHIRO, Naoki
Tsukuba-shi Ibaraki 305-0031 (JP)
• OHTAKE, Kohei
Yokohama-shi Kanagawa 223-0056 (JP)

(74) Representative:
Skone James, Robert Edmund
GILL JENNINGS & EVERY
Broadgate House
7 Eldon Street
London EC2M 7LH (GB)

(54) **FRAME WAVEFORM MUTUAL CORRECTION DATA SIGNAL DEMODULATION METHOD**

(57) A data transmission system in which a carrier wave or spread sequence is modulated by means of binary or multi-value information and transmitted for each symbol frame period, and each reception frame waveform received on the reception side is demodulated and detected, thus restoring such an information, wherein a differential frame is created by multiplying and adding a correction coefficient with at least one of the two frames designated as the $0^{th}$ frame and the $j^{th}$ frame so that the noise components contained in the $0^{th}$ frame waveform and the $j^{th}$ frame waveform are canceled each other, and a transmission information component contained in the differential frame is subjected to a correlation detection, thus restoring the transmission information. More specifically, the present invention provides a frame waveform mutual correction type data signal demodulation system in which the reception-side SN ratio relative to the process gain $G_p$ is conspicuously increased by the method in which the interference noise of a given frame is canceled by the interference noise of other frames in cases where the interference noise with other stations is a governing factor.

FIG. 5

(a) BLOCK DIAGRAM OF A TRANSMITTER-RECEIVER USED IN A SPREAD SPECTRUM SYSTEM

(b)

**Description**

〈〈**Background of the Invention**〉〉

〈**Field of the Invention**〉

The present invention relates to a communications system that uses spread spectrum modulation which makes it possible in particular to improve the resistance of the system to interference noise, which has an especially detrimental effect among noise admixed in the transmission process, and to a communications system that uses base band pulse modulation or band-pass type data modulation which makes it possible to improve the resistance to colored noise.

〈**Description of Prior Art**〉

In spread spectrum communications, a spreading code sequence is modulated by transmission data so that the data, which shows a spectrum with a relatively narrow band, is spread and transmitted over a wide frequency band. Such a communications system is a superior communications system in which the transmission power per unit frequency is small, so that interference with other communications can be kept at a relatively low level, and in which the system has an inherent strong resistance to ambient noise that is admixed in the communications process, e. g., general external noise and interference noise entering from mobile stations or interfering stations other than the desired station. However, since communications from numerous stations share the same band, the following problem also exists: i.e., the hindering of communications by the above-described interference noise is a governing factor.

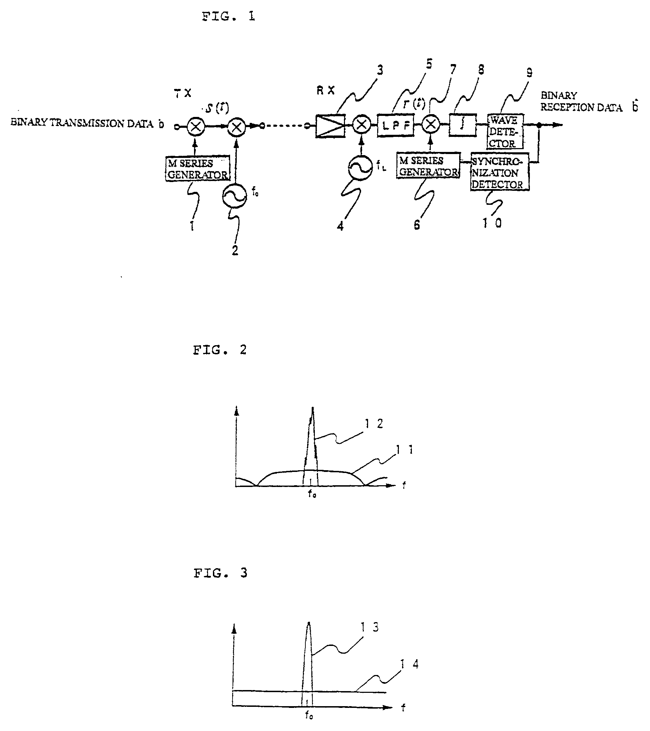

Figure 1 is a block diagram which illustrates the general construction of a mobile communications system which performs spread spectrum communications via a wireless communications channel. Here, in the transmittor TX, binary transmission data **b** is modulated by a spreading code sequence generated by a sequence generator 1, thus producing a base band transmission output s(t), and this base band transmission output s(t) is further modulated by a carrier wave with a frequency of $f_0$ which is generated by an oscillator 2, so that the carrier wave containing the data **b** is spread over the spectrum, after which this wave is sent to a receiver RX via a wireless communications channel. Furthermore, pseudo-noise (a PN sequence) whose bit period length is the same as the period length of the data **b** is generally used as the spreading code sequence. In the following description, an M sequence, which is the most widely used type of sequence among PN sequence, will be used as an example.

At the receiver RX, the received signal which has been spread spectrum modulated is sent to an amplifier 3 via an antenna (not shown in the Figures). The signal is amplified to a prescribed level, and this amplified signal is frequency-mixed with the local signal $f_L (= f_0)$ of a local oscillator 4. A base-band received spread signal r(t) is demodulated by making this signal pass through a low-pass filter 5. In other words, coherent demodulation or non-coherent demodulation is performed.

This base-band spread signal r(t) is inputted into a multiplier 7 along with an M sequence code that is the same as the code sequence used at the transmittor TX and generated by the sequence generator 6. As a result, the multiplied despread output is obtained. A matched filter output is obtained by integrating the despread output with an integrator 8 for the period of the sequence length of the M sequence (1 frame), This output is detected by a detector 9 at the end of the frame, and the binary received data **b** is demodulated by a hard decision function which compares this output with a threshold value. A control signal created based upon this demodulated data is inputted into the control terminal of the sequence generator 6 via a synchronization detector 10, and the timing of the generation of the M sequence is controlled so that the phase is synchronized with the received signal. Furthermore, in the receiver RX shown in Figure 1, the modulating functions each of which is performed by the local oscillator 4 output and sequence generator 6 output are often interchanged; however, the overall demodulation function is the same.

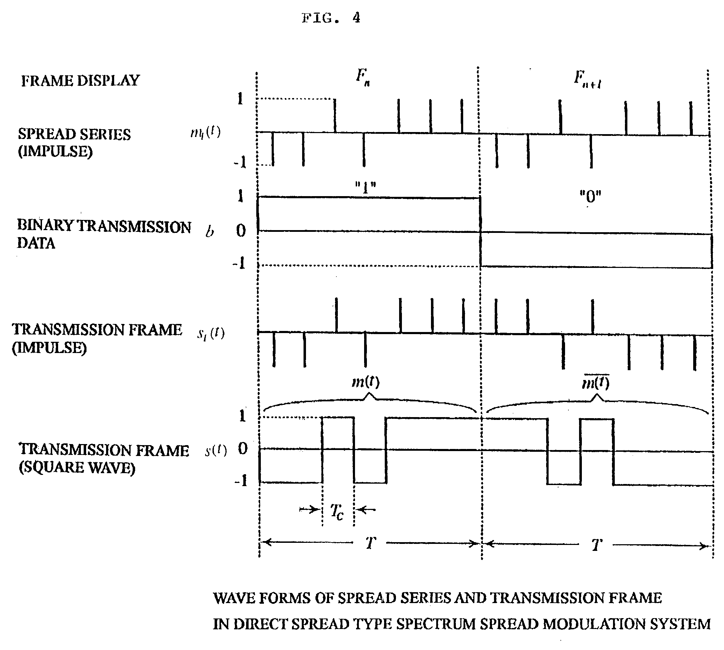

Figure 2 shows a model spectrum of the signal in the transmission process. 11 is a spectrum of the spread-spectrum modulated signal, and 12 is a spectrum of admixed ambient noise. When this is despread by the M sequence at the receiver, the spread signal 11 which had been spread over a broad frequency band a narrow-band signal 13 as shown in Figure 3; furthermore, the ambient noise 12 is transformed into a signal 14 which is spread over a broad frequency band. Accordingly, this communications system has an effect of suppressing the ambient noise.

Figure 4 is a diagram which shows the relation between the spreading code (impulse) sequence $m_l$ and binary information in a conventional direct sequence spread spectrum communications system (DS-SS). This is an example in which the code length L = 7 (chips). In this Figure, **b** indicates binary data that is to be transmitted, T indicates the period of the data (frame period), $T_c$ indicates the chip period, and $s_l(t)$ indicates the multiplied output of $m_l(t)$ by **b**. The transmission frame s(t) is such transmission baseband waveform that the respective impulses of $s_l(t)$ take square waves. Furthermore, $m_l(t)$ and m(t) are given by the following:

$$m_I(t) = \sum_{i=0}^{L-1} c_i \delta(t - iT_c) \qquad 0 \le t \le T \qquad\qquad (1)$$

$$m(t) = \sum_{i=0}^{L-1} c_i q_1(t - iT_c) \qquad 0 \le t \le T \qquad\qquad (2)$$

$$\left. \begin{array}{ll} q_1(t) = 1 & |t| \le \dfrac{T_c}{2} \\[2mm] \quad = 0 & |t| > \dfrac{T_c}{2} \end{array} \right\} \cdots (3)$$

Here, $c_i$ (i = 0, 1, 2 ..., L -1 : L is the sequence length of the spreading sequence) is the i-th chip amplitude of the spreading sequence, $\delta$ is the delta function, and $q_1$ is the square wave function. As is shown in the Figure, the square wave m(t) of $m_I(t)$ is sent out in response to "1", and the inverted output $\overline{m(t)}$ is sent out in response to "0". Practically, signal s(t) is band-limited less than $f_c = T_c^{-1}$ and then converted to a wireless frequency band and transmitted. Accordingly, the frequency band width occupied by the data signal is roughly $f_D = 1/T$, and that of the spread transmission output s(t) is roughly $f_c = T_c^{-1}$; here, $f_c$ is given by the following:

$$f_c = Lf_D \qquad\qquad (4)$$

Furthermore, instead of making $q_1(t)$ a square wave as shown by Equation (3), it would also be possible to transmit using a waveform $q_1'(t)$ which is such that the autocorrelation function at an adjacent sampling point is 0 (this is called a modified sampling function; the DFT conversion of $q_1(t)$ has cosine roll-off characteristics). In this case, if the same $q_1'(t)$ as used by the transmittor is prepared at the receiver, and correlating demodulation is performed by means of this waveform, the desired signal components at the receiver will be an impulse train indicated by Equation (2). The signal can be detected by despreading this impulse train using $m_I(t)$. Accordingly, since the spread-spectrum modulated signal occupies an extremely broad frequency band, the colored noise power (same phase component as the signal m(t)) can be suppressed to 1/L, so that this system is effective against noise.

Generally, however, L >> 1, so that even if a L times bandwidth is used, the number of simultaneous calls $N_s$ is such that $N_s$ << L (L has a fractional value equal to the ratio of one to several parts); accordingly, the simultaneous transmission volume/Hz is ($N_s$/L) times that of a time-division multiplex system (TDMA). Consequently, this system suffers from the following drawback: i. e., the frequency band utilization efficiency of the transmission path is generally extremely low compared to that of a time-division multiplex system.

Thus, the reason that the number of simultaneous calls $N_s$ cannot be set at a very large value relative to L is that the cross-correlation coefficient existing between the M sequence $m_0(t)$ assigned to the desired station and the different types of M sequence $m_k(t)$ (k $\ne$ 0) assigned to other stations cannot be made sufficiently small. Furthermore, the suppressing effect on colored noise and transmission noise accompanying fading or delayed waves generated by multiple reflections (multi-path) in the transmission process is also generally insufficient. Mainly these factors reduce the frequency utilization efficiency in spread spectrum communications systems.

The process gain $G_P$ of a conventional direct sequence spread spectrum communications system is given by the following:

$$G_P = 10\log_{10} L \qquad\qquad (5)$$

If the incoming noise has a single frequency, and the phase of this noise is the same as the phase of $m_0(t)$, the demodulated noise power following demodulation at the receiver (i. e., the output of the integrator 8 in Figure 1) will be 1/L relative to the incoming noise power (output of the LPF 5 in Figure 1), as described above. However, in regard to cross-correlation values between different M sequence, $m_0(t)$ and $m_k(t)$ are independently modulated by the transmission information; furthermore, there is a fluctuation according to the mutual phases regarding the both frames, with the mean

value $\rho$ being given by the equation $\rho = 1/\sqrt{L}$. The worst correlation value is conspicuously larger than this value. As a result, numerous interference waves with a high mutual correlation enter over a long period of time; as a result, the code error rate often conspicuously deteriorates, so that the number of simultaneous calls $N_s$ cannot be set at a large value.

〈〈**Disclosure of the Invention**〉〉

In light of the above-described conventional problems, the object of the present invention is to provide a frame waveform mutual correction type data signal demodulation system which makes it possible to achieve a conspicuous increase SN ratio at the receiver relative to the process gain $G_p$, by means of a method in which the interference noise of a given frame is canceled by the interference noise of other frames in cases where the interference noise with other stations is a governing factor among the various types of noise.

The present invention makes it possible to improve the SN ratio after demodulation in a data transmission system by suppressing interference noise and white noise. If the present invention is applied to base-band transmission or band-pass type data transmission using a binary to 3-value pulse waveform, white noise and the interference noise between symbols can be suppressed. Examples of the latter include phase modulation (PSK) used for time-division multiplex (TDMA) systems, frequency modulation (FSK), orthogonal modulation (QAM) and orthogonal frequency-division modulation (OFDM), etc. Furthermore, if the present invention is applied to a code division multiplex (CDMA) system in which numerous users share the same transmission band, a conspicuous effect in suppressing interference noise can be obtained.

In order to solve the above-described problems, the invention claimed in Claim 1 of the frame waveform mutual correction type data signal demodulation system of the present invention is characterized by the fact that in a data transmission system in which binary or multi-value information modulates a carrier wave or spreading signature sequence and transmits it for each symbol frame period so that each received frame waveform received at the receiver is demodulated and detected and then the information is restored, the $l^{th}$-differential frame is created by multiplying a correction coefficient by at least one of the two frames designated as the $0^{th}$ reference frame and the $j^{th}$ partner frame, and adding the two frames so that the noise components contained in the $0^{th}$ frame waveform and the $j^{th}$ frame waveform are canceled each other, and the information transmitted on the $0^{th}$ reference frame is restored by detecting the signature component contained in the differential frame with correlation technique.

The invention claimed in Claim 2 of the frame waveform mutual correction type data signal demodulation system of the present invention is characterized by the fact that in Claim 1, a received chip waveform formed by dividing the received frame waveform into a plurality of chip sequence, or received chip impulses formed by demodulating parts of this received chip waveform, are created, the above-described received chip waveform or received chip impulses are moved to another chip position or a plurality of other chip positions under the conditions that the received frame signal components are maintained, and they are used as the substitution for the received chips on said chip positions, and said information is detected by the means described in Claim 1 using these modified received frames.

The invention claimed in Claim 3 of the frame waveform mutual correction type data signal demodulation system of the present invention is characterized by the fact that in Claim 1, respective despread alternating-current components which are made by multiplying each of a pair of the received frames by the reference signature signal wave are obtained in the correlation detection process at the receiver, the cross-correlation coefficient of said pair of alternating-current components is obtained, the differential frame waveform is created by adding said pair of received frame waveforms afrer at least one frame of the pair of received frames is multiplied by a modifying coefficient produced based upon said cross-correlation coefficient, and the desired station signature component contained in said differential frame is detected by correlation detection.

The invention claimed in Claim 4 of the frame waveform mutual correction type data signal demodulation system of the present invention is characterized by the fact that in Claim 3, the $0^{th}$ received reference frame and the $l^{th}$ received partner frame which is paired with said $0^{th}$ received reference frame are extracted, the cross-correlation coefficient between the despread alternating-current components of both frames is obtained, the j-th differential frame corresponding to the $l=j$-th received partner frame of which said cross-correlation coefficient takes a large value is found, the desired station signature components is formed. The desired station signature component is obtained from the j-th differential frame with correlation technique, similar components obtained between the $0^{th}$ received frame and other receied partner frames are arranged in order, and the transmitted information is detected by comparing the maximum value or mean value of the amplitudes of these signature component with a threshold.

The invention claimed in Claim 5 of the frame waveform mutual correction type data signal demodulation system of the present invention is characterized by the fact that in Claim 4, for the $0^{th}$ received reference frame, the despread alternating-current component of the $l$-th differential frame between said the received reference frame and the $l^{th}$ received partner frame forming is compared with similar despread alternating-current components of the other differential frames, the signature component contained in the $l = U^{th}$ differential frame of which despread alternating-current component power takes a small value, and the transmitted information is detected by comparing the polarity of the maximum value or mean value of the amplitudes of these signature components with a threshold.

The invention claimed in Claim 6 of the frame waveform mutual correction type data signal demodulation system of the present invention is characterized by the fact that in Claim 4, in a case where the correlation coefficient between the despead alternating-current component of a differential frame created for a received partner frame and similar despread alternating-current components for another differential frame exceeds a predetermined threshold value, a double differential frame is created by multiplying the correction coefficient by at least one of the differential frames and adding both frames, and the transmitted information is detected by detecting the signature component contained in the double differential frame with correlation technique.

The invention claimed in Claim 7 of the frame waveform mutual correction type data signal demodulation system of the present invention is characterized by the fact that in Claims 1 through 6, a means is added which alters the noise components contained in the received frame by moving chip waveforms of the received frame composed of a plurality of chip signals and the chip noise contained in said chip intervals, or the chip impulse outputs obtained by integrating said chip waveforms, to another chip position or plurality of other chip positions within the same frame under conditions that the signal component contained in the received frame is maintained, and using them as a substitute chip or chips for said chip positions, and the transmitted information is detected by using the demodulated components or despread alternating-current components of the $0^{th}$ received reference frame and the $l^{th}$ received partner frame so that the noise canceling effect of the differential frame produced by multiplying the correction coefficient by one of the above-described pair of received frames is increased.

The invention claimed in Claim 8 of the frame waveform mutual correction type data signal demodulation system of the present invention is characterized by the fact that in Claims 1 through 7, the effects of interference noise can be respectively alleviated in the coherent demodulation process of in-phase or orthogonal frames transmitted by the desired station to the receiver by using a system in which an in-phase/orthogonal frame interleaved transmission signal is produced so that even-numbered symbol frames are modulated by the reference carrier wave, and odd-numbered symbol frames are modulating by the orthogonal reference carrier wave which has a phase that is orthogonal to the reference carrier wave.

The invention claimed in Claim 9 of the frame waveform mutual correction type data signal demodulation system of the present invention is characterized by the fact that in Claim 3, a synchronization function is provided which is devised so that in a state in which the symbol framing is lost, the signature component contained in the differential frame made from a pair of hypothetical received frames framed by the hypothetical window frame preset at the receiver is detected with correlation technique, and the power of the signature component is obtained, the mean value of the power is determined based upon the signature component power values obtained from numerous other similar received frame pairs, the hypothetical window is shifted to another position, the similar mean value of the signature component power values is determined, and the symbol frame synchronization is determined for the shifted position of the hypothetical window frame that gives the maximum value among the above-described power values.

The invention claimed in Claim 10 of the frame waveform mutual correction type data signal demodulation system of the present invention is characterized by the fact that in Claims 4 and 5, despread alternating-current component for each received frame is obtained by multiplying each of a pair of received frames by the signature in the correlation detection process at the receiver, and a pair of frames producing the differential frame is chose such that the power of the despread alternating current components of the $0^{th}$ reference frame and the $l^{th}$ pertner frame are equal to each other.

The invention claimed in Claim 11 of the frame waveform mutual correction type data signal demodulation system of the present invention is characterized by the fact that in Claim 8, the system is devised so that some of the effects of interference noise can be eliminated at the receiver by using an in-phase/orthogonal frame alternate by arranged transmission signal in which the base band signals on the even-numbered frames take in-phase waves of the spreading sequence, while the base band signals on the odd-numbered frames take orthogonal waves of the respect to the spreading sequence.

The invention claimed in Claim 12 of the frame waveform mutual correction type data signal demodulation system of the present invention is characterized by the fact that in Claims 1 through 7, in cases where the invention is used in a transmission system which uses a base band pulse modulation (PCM) system, or a band-pass type modulation system such as PSK, DPSK, FSK or OFDM, etc., a differential frame is produced by multiplying the modifying coefficient (produced on the basis of the cross-correlation coefficient of demodulated alternating-current components for a pair of received frames) by at least one of the received frames, and the transmitted information is detected by demodulation detection of the above-described differential frame.

The invention claimed in Claim 13 of the frame waveform mutual correction type data signal demodulation system of the present invention is characterized by the fact that in Claim 12, the transmitted information is detected by processing the auto-correlation functions of the received frames and the auto-correlation function of the signature signal wave as the received frame and the reference signal wave.

The invention claimed in Claim 14 is characterized by the fact that in a data transmission system in which a carrier wave or spreading sequence is modulated by means of binary or multi-value information and transmitted for each symbol frame period, and in which each received frame waveform received at the receiver is demodulated and detected, and the information is restored, the system comprises: a step in which the logical products of the received frame waveforms and received frame extracting pulses are taken, $(2\mu + 1)$ signals $r_n(t)$ are obtained for each received frame, and these signals are stored; a step in which the spreading sequence used in modulation on the transmittor side is multiplied with the received frame waveforms so that despread outputs $u_n(t)$ are obtained; a step in which the alternating-current components $\tilde{u}_n(t)$ of the despread outputs $u_n(t)$ are obtained; a step in which $(2\mu + 1)$ of the signals $r_n(t)$ and the alternating-current components $\tilde{u}_n(t)$ are stored for each received frame; a step in which $2\mu$ differential frames $d_j$ between the $(n + \mu)^{th}$ signal $r_n(t)$ and $(n + \mu + j)^{th}$ signal $r_j(t)$ are produced; a step in which the correlation outputs of the $2\mu$ differential frames and the M sequence of the desired station are obtained; a step in which the expected values of the M sequence components of the desired station contained in the received frames are calculated from the correlation outputs; and a step in which hard decision processing of the expected values is performed; and the received signal is demodulated by these means.

The important parameter used in the present invention consists of the despread output alternating-current components $\tilde{u}(t)$; when the despread alternating-current components $\tilde{u}(t)$ are multiplied by the reference signal wave, the orthogonal noise components $x_Q(t)$ are produced. Accordingly, exactly the same function could also be realized by using the orthogonal noise components $x_Q(t)$ instead of the despread output alternating-current components $\tilde{u}(t)$.

⟨⟨**Brief Description of the Drawings**⟩⟩

Figure 1 is a block diagram of the general model of a mobile communications system which performs spread spectrum communications via a radio channel.

Figure 2 is a diagram which shows the model spectrum of a transmission signal.

Figure 3 is a diagram which shows the model spectrum of despread a signal with the M sequence.

Figure 4 is a diagram which illustrates the correspondence between binary information and transmission frame signals in a conventional direct sequence spread spectrum communications system.

Figure 5(a) is a block diagram of the transmittor-receiver used in a spread spectrum system constituting one embodiment of the present invention, and Figure 5(b) is a partial block diagram of the receiver shown in Figure 5(a).

Figure 6 is a diagram which shows a frame signal and a frame of combined interference noise.

Figure 7 is a diagram which shows the periodic stationary characteristics of interference noise.

Figure 8 is a diagram showing a demodulation circuit which generates a chip impulse train and matching filter output produced from band-pass type received frame signals.

Figures 9(a) and 9(b) are diagrams which show the received noise frame waveform and matching filter output waveform.

Figure 10 is a diagram which shows the despread output alternating-current components rearranged in order of magnitude.

Figures 11(a), 11(b) and 11(c) are diagrams which show the received noise frame waveform and the matching filter output waveform via MF.

Figure 12 is a diagram which shows a comparison of the noise components on the differential frames produced by various systems of the present invention.

Figure 13 is a block diagram of a differential frame demodulation system for an in-phase/orthogonal carrier frame alternately arranged type modulation.

Figure 14 is a diagram which shows the signal frames and interference noise frames in an in-phase/orthogonal frame alternately arranged by system.

Figure 15 is a diagram which shows the periodic stationary characteristics of interference noise in an in-phase/orthogonal frame alternately arranged positioning modulation system.

Figure 16 is a diagram which shows one example of a base-band in-phase/orthogonal square wave spreading sequence.

Figure 17 is a block diagram which illustrates a differential frame demodulation system for an in-phase/orthogonal base-band frame alternately arranged type modulation.

Figure 18 is a block diagram of a frame synchronization system used in a DS-SS transmission system.

Figure 19 is a diagram which illustrates one example of the received frame signal in a PSK modulation system.

Figure 20 is a block diagram of a received chip impulse train generating circuit.

Figure 21 is a diagram which shows the demodulated impulse train produced from the PSK received input.

Figure 22 is a diagram which shows a demodulation circuit for a non-coherent FSK-modulated signal.

《《The Best Mode to Carry Out the Invention》》

The present invention will be described in detail below based upon the working configurations shown in the Figures. Furthermore, the present inventor has announced a "in-phase/orthogonal sequence alternately arranged type CDMA synchronization system" in Denshi Joho Tsushin Gakkai Gijutsu Kenkyu Hokoku (SST96-98 ~ 111 "Spread Spectrum"/March 19, 1997). In this CDMA synchronization system, the frame arrangement at the transmittor is adopted so that in-phase waves and orthogonal waves of the spreading sequence are alternately arranged in order to reduce the effective noise power that disturbs the synchronization detection. In order to cancel the noise contained in incoming noise on a frame by the noise on other frames, differential frames are produced from the sum or difference with the two adjacent frames, and interference noise is canceled using these differential frames. With a method in which the presence or absence of any signal power remaining in the differential frames is determined from the correlation output $\rho$ of said differential frames, the estimation as to whether or not the frame synchronization at the receiver is being maintained is performed.

However, in the synchronization system described in the above publication, the object of the system is to detect the presence or absence of a signal with high precision in a probabilistic manner. Accordingly, a power-based detection system is used, because it did not require such high technology of detecting the polarity of signals in the present invention. Furthermore, since the synchronization system is used to detect synchronization, it does not require precise detection technique on the presence or absence of a signal on each frame, it is sufficient if the presence or absence of a signal in respective frames can be detected in a probabilistic manner using numerous frames, and there is no provision of a function which checks the degree of noise cancellation, etc. Accordingly, the long-term average of the correlation output power $\rho^2$ is used as an evaluation function; and the precision in detection is increased under conditions in which in-phase and orthogonal wave alternately arranged frame format is used.

In the case of the present invention, the concept of a differential frame involved in the above-described publication is developed; and with a focus on a given individual frame, an evaluation function was discovered which made it possible to detect not only the presence of signal components contained in such a frame, but also the polarity of said signal components, with a high degree of precision (error rate: $10^{-3}$ to $10^{-10}$). By setting several types of such high-precision evaluation functions, it is possible to check the degree of noise cancellation; as a result, a means which makes it possible to judge very precisely the polarity (or multi-value levels) is provided.

Furthermore, the present invention introduces the novel concept of a chip position moving system which is not included in the synchronization system of the above-described publication, and provides a technique which conspicuously can narrow the searching range for candidate frames capable of noise cancellation. This technique has the advantage of allowing application to communications between high-speed moving bodies as well; and if this technique is applied to a synchronization system, a synchronization system which is far superior to the above-described publicized system (in terms of shorter synchronization pull-in time and more precise synchronization error detection, etc.) can be obtained, as will be described later.

The principle of the present invention is as follows: i. e., in cases where the noise contained in a single data symbol frame and the noise of another nearby frame are compared and found to be similar, the difference of both frames is taken so that these noise components may cancel each other, and the desired signal component contained in this differential frame is detected. In cases where the main portion of the noise is interference from other stations, the occurrence probability of frames containing similar noise can be statistically obtained with the periodic stationary characteristics; accordingly, cancellation of the noise can be almost completely achieved by increasing the number of adjacent frames to be paired for comparison. Thus, the SN ratio after demodulation can be greatly increased.

Furthermore, in the description of the examples of the present invention, from the viewpoint of applying to mobile communications, as examples, a direct sequence spread spectrum system (DS-SS), in which the effect of application is especially great, and a mobile communications system in which modulation system such as PSK, is used are explained. Furthermore, as the spreading sequence, an M sequence is used as an example.

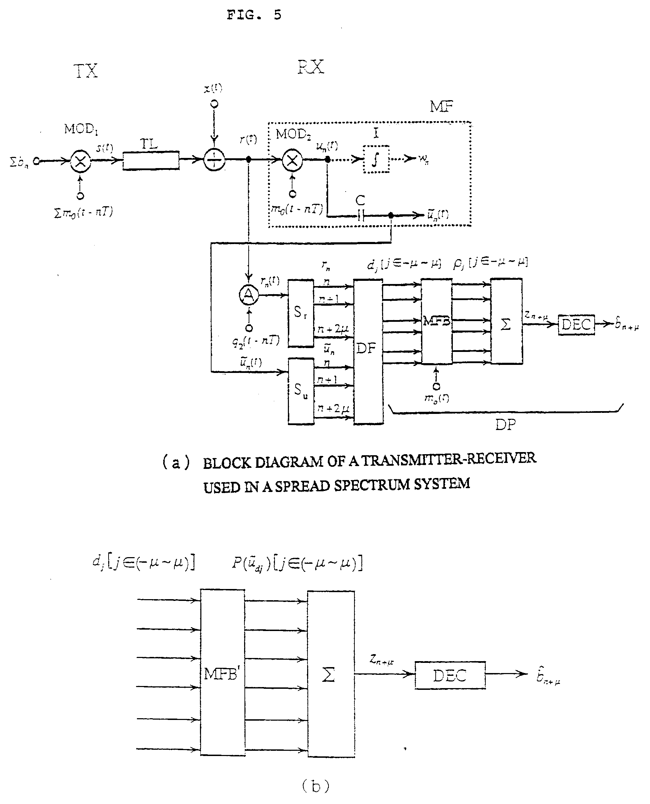

Figure 5(a) is a block diagram of the transmittor-receiver used in a spread spectrum system constituting one embodiment of the present invention. In the same Figure, $MOD_1$ and $MOD_2$ are multipliers, I is an integrator, C is a capacitor, A is an AND gate, $S_r$ is a receiving frame memory, $S_u$ is a despread alternating-current component memory, DF is a differential frame generating circuit, MFB is matching filter circuits, $\Sigma$ is an MFB output selection and addition circuit, and DEC is a hard decision circuit. Moreover, in the same Figure, the modulation and demodulation processes with the radio frequency band are omitted, and only the base band function is shown. Furthermore, most of the circuit functions shown in the Figure can be realized by digital signal processing; however, the A/D converters required for this purpose are omitted from the Figure.

The $n^{th}$ binary data $b_n(\in \pm 1)$ modulates the M sequence $m_0(t)$ in the multiplier (modulator) $MOD_1$ of the transmittor TX, thus producing the $n^{th}$ transmission base band frame signal $S_n(t)$. The transmission base band signal s(t) is a frame sequence as shown in Figure 4, and is expressed by the following equation:

$$s(t) = \sqrt{P} \sum_{n=-\infty}^{\infty} b_n m_0(t - nT) \tag{6}$$

Here, P is the transmission power, and s(t) is transmitted to a receiver RX via a transmission path TL.

Meanwhile, the received signal r(t) for the receiver is the sum of the signal components $m_0(t)$ and noise x(t), and is given by the following equations:

$$r(t) = \sum_{n=-\infty}^{\infty} r_n(t) \tag{7}$$

$$r_n(t) = \sqrt{P'} b_n m_0(t - nT) + x_n(t) \tag{8}$$

$$x(t) = \sum_{n=-\infty}^{\infty} x_n(t) \tag{9}$$

Here, the practical signal component $m_0(t)$ takes a waveform distored by limiting the band width of the transmitting square wave in Figure 4 less than $f_c$, and P' is the received signal power. Furthermore, it is assumed that the distortion being subject to the transmission process is equalized by an equalizing circuit of the receiver. Actually remaining equalization residue component and distortion component resulting from band limitation of the signal component $m_0(t)$ may be viewed as being included in the noise x(t); accordingly, it may be considered that an M sequence that is completely equal to the waveform used at the transmittor is received at the receiver as well. Furthermore, it is assumed that frame synchronization is maintained by other means, and display of the delay time between transmittor and receiver is omitted.

The multiplier MOD$_2$ and integrator I constitute a despread filter (MF). The despread outputs $u_n(t)$ obtained by multiplying the received signals $r_n(t)$ by the M sequence, the direct-current component of the output (correlation output, in-phase component with respect to the reference signal $m_0(t)$) $w_n$ and the alternating-current component $\tilde{u}_n(t)$ of the output (orthogonal component with respect to the reference signal $m_0(t)$) are respectively given by the following equations (10) through (12); these values can be obtained as the output of the matching filter MF.

$$u_n(t) = r(t)m_0(t - nT) = r_n(t)m_0(t - nT) = w_n + \tilde{u}_n(t) \tag{10}$$

$$w_n = \frac{1}{T} \int_0^T u_n(t)dt \tag{11}$$

$$\tilde{u}_n(t) = u_n(t) - w_n \tag{12}$$

Here, since the standard deviation of the reference signal $m_0(t)$ is 1, the direct-current component $w_n$ consists of the correlation output $w_{sn}$ based on the signal component and the correlation output $w_{xn}$ baced on the noise component.

$$w_n = w_{sn} + w_{xn} \tag{13}$$

$$w_{sn} = \sqrt{P'} b_n \tag{14}$$

The direct-current component $w_n$ and the alternating-current component $\tilde{u}_n(t)$ are obtained as the outputs of the matching filter MF shown in Figure 5(a).

The received signal r(t) is applied to the logic AND gate A to which the following frame extracting pulse $q_2(t - nT)$ is applied; consequent, the output is $r_n(t)$.

$$q_2(t) = 1 \qquad -\frac{T_c}{2} \leq t \leq \left(T - \frac{T_c}{2}\right) \tag{15}$$
$$= 0 \qquad -\frac{T_c}{2} > t > \left(T - \frac{T_c}{2}\right)$$

The output $r_n(t)$ thus obtained is in tune stored in the memory $S_r$. The number of received frames stored is $(2\mu + 1)$. Similarly $(2\mu + 1)$ despread alternating-current components $\tilde{u}_n(t)$, which is the output obtained through the capacitor C, are stored in the despread alternating-current component memory $S_u$.

The differential frame generating circuit DF generates the differential frame $d_1$ ($l = -\mu, -\mu + 1, \dots -1, 1, \dots \mu - 1, \mu$) between the $(n + \mu)^{th}$ received frame and $(n + \mu + l)^{th}$ received frame, resulting in producing $2\mu$ differential frames. Practically, however as will be described later, only a portion $d_j$ ($j \in l$) of the $2\mu$ differential frames are generated. These differential frame signals are transmitted to the matching filter circuits MFB.

The matching filter circuits MFB consist of $2\mu$ matching filters, and generates the correlation output $\rho_j$ between the respective differential frame signal $d_j$ and the M sequence $m_0(t)$ which is signature of the desired station. The selection and addition circuit $\Sigma$ calculates the expected value $z_{n+\mu}$ of the $m_0(t)$ component contained in the $\mu^{th}$ received frame based on these correlation outputs. The hard decision circuit DEC performs hard decision function with $z_{n+\mu}$, and produces an estimated binary values $\hat{b}_{n+\mu}$. The decision processing block DP is composed of the matching filter circuits MFB, the selection and addition circuit $\Sigma$ and the hard decision circuit DEC.

In other words, the present invention is a system in which the expected value $z_{n+\mu}$ is determined using $\mu$ received frames arriving before and after the received frame to be estimated.

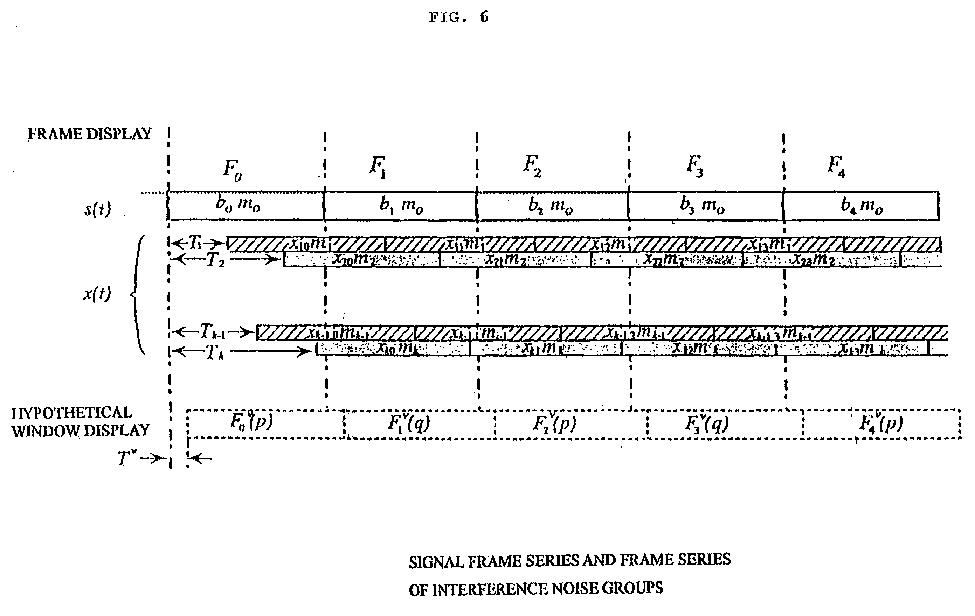

Figure 6 is a frame chart of the transmitting and received signal and noise. $F_n$ designates the symbol frame position of the receved signal addressed for the desired station; $m_k(t)$, ($k = 1, 2, \dots K$) is the M sequence of the interfering stations, $x_{kn}$ is the voltage amplitude of the interference noise arriving from the $k^{th}$ interfering station at a frame position overlapping $F_n$ and $F_{n+1}$. Here, as given by the following Equation (16), the noise $x(t)$ is described as being constructed only from the interference noise from K interfering stations.

$$x(t) = \sum_{k=1}^{K} \sum_{n=-\infty}^{\infty} x_{kn} m_k(t - nT - T_k) \tag{16}$$

$$x_{kn} = \sqrt{P_k'} b_{kn} \tag{17}$$

Here, the symbols with subscript k are of noise component parameters given by the $k^{th}$ interfering station; $m_k(t)$ is an M sequence being different with k, $P_k'$ is the received signal power, $b_k$ is the binary information, and $T_k$ is the time difference from $F_n$.

As is seen from the same Figure, the time difference $T_k$ ($\leq T$) with $F_n$ and the received signal power $P_k'$ are unknown parameters, and are random variables which vary with time. However, considering the frame position $F_0$, these variables can be assumed to be constant over a very short time interval such as $\pm \mu$ frames before and after $F_0$ (this is referred to as the quasi-stationary time interval; for example, in cases where the fluctuating component $\Delta T_k$ of the time difference $T_k$ is such that $\Delta T_k << T_c$). Although, the voltage amplitude $x_{kn}$ of the interference noise arriving from the $k^{th}$ interfering station at a frame position overlapping $F_n$ and $F_{n+l}$ also varies with time; considering that $b_{kn}$ in Equation (17) is binary, it is reduced the less the number of interfering stations K is, the more similar noise arrives at the frame positions of $F_n$ and $F_n'$.

By denoting this probability (opposite polarities are viewed as being the same) as $\rho_x$, we obtain the following:

$$\rho_x = 2(4^{-K}) \tag{18}$$

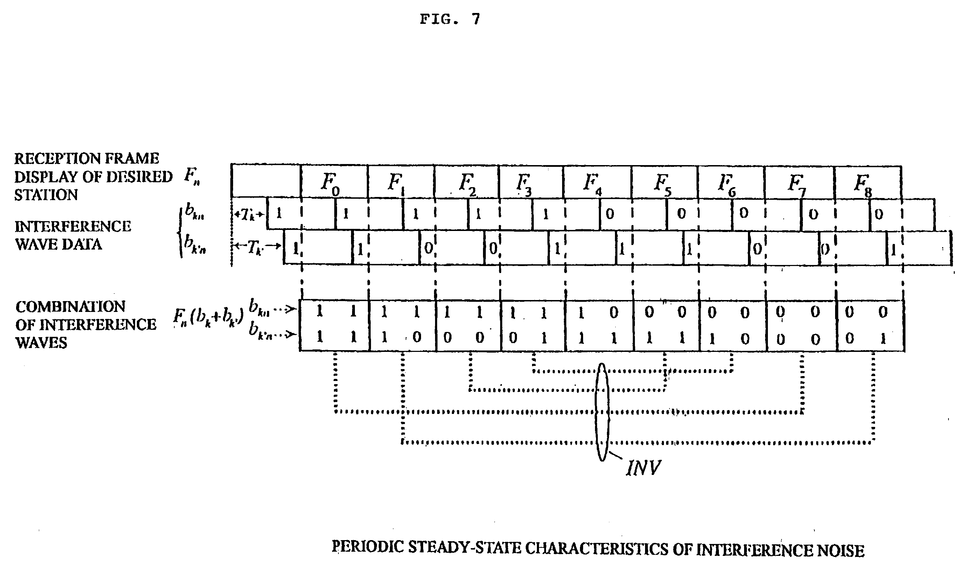

Figure 7 is a diagram which shows the periodic stationary characteristics of such interference noise. This is an example where the $n^{th}$ data $b_{kn}$ of the interfering signal from the $k^{th}$ interfering station takes a continuation of 1 or a continuation of 0 in the case of K = 2, and $b_{k'n}$ and $b_{k'n+l}$, which are the adjacent frame data of the interfering signal coming from another $k^{th}$ interfering station take four kinds of patterns. Since $b_{k'n}$ and $b_{k'n+l}$ also take four kinds of patterns in cases where $b_{kn}$ takes (1, 0) or (0, 1), 4K patterns exist. (For real in terms of transmission the value of $b_{kn} = 0$ is transformed to -1.)

In the Figure, the patterns with mutually opposite polarity are connected by the connecting lines INV. These are viewed as being the same type of pattern in terms of similar noise detection; as a result, the number of different types of patterns is reduced by 1/2, resulting in Equation (18).

Furthermore, the receiving station is strongly susceptible to interference noise coming from interfering stations located nearby the receiving station. More specifically, it is extremely difficult to perform strict so-called power control that is to control the transmitting power of respective stations so that the power received from respective stations at the base station takes certain constant value. Because of this practical restriction, the receiving station is strongly susceptible to the interference noise from nearby interfering stations. Consequently, the number of influence stations regarding interference would appear to be several. For example, a case of that k = 4 results $\rho_x = 1/128$, i. e. the same interference pattern appears at the rate of one time in 128 frames. Accordingly, in the construction shown in Figure 5(a), by setting $\mu = 64$, and making the differential frames over the frame range of l = -64 ~ -1, +1 ~ 64, statistically, the noise components will completely cancel each other in 1 frame out of 128 differential frames.

Here, simplifying the labeling of frame numbers, the frame number n + $\mu$ + l will be indicated as l.

$$n + \mu + l \rightarrow l$$

Here, for the received center frame $r_{n+\mu} = r_0$ and the $l^{th}$ received frame $r_{n+\mu+l} = r_l$ ( l = -$\mu$, ... -1, 1, ... $\mu$) located nearby, the despread alternating-current components $\tilde{u}(t)$ are considered to be components only due to noise, and therefore the correlation coefficient $\gamma_l$ of both noise components is defined as follows:

$$\gamma_l = \frac{\overline{\tilde{u}_0(t)\tilde{u}_l(t)}}{\sigma_0 \sigma_l} \cdots (19)$$

$$\left. \begin{array}{l} \sigma_0 = \left\{ \overline{\tilde{u}_0^2(t)} \right\}^{1/2} \\[4mm] \sigma_l = \left\{ \overline{\tilde{u}_l^2(t)} \right\}^{1/2} \end{array} \right\} \cdots (20)$$

Here, the bar (—) indicates the average value for t (= 0 ~ T).

The correlation coefficient $|\gamma_l|$ is equal to or less than 1; however, if $|\gamma_l| \fallingdotseq 1$, there is a high possibility of a strong correlation between the in-phase components of both received frame noise waveforms as well. This is due to the following statistical property that when a similar correlation coefficient $\Gamma_l$, between the noise components $x_0(t)$ and $x_l(t)$ of both frames is obtained, the occurrence probability of $\lambda_l = (\Gamma_l / \gamma_l)$ is further determined by varying the frame number l, the occurrence probability of $\lambda_l$ distributes around $\lambda_l = 1$, and the probability in the vicinity of 1 is extremely high (in other words, $\Gamma_l \fallingdotseq \gamma_l$). Therefore, with a threshold value $\gamma^{th}$ which is close to 1 is determined, and the l = j$^{th}$ received frame which satisfies the condition

$$|\gamma_j| \geq \gamma_{th} \tag{21}$$

is taken for consideration. This frame number is denoted by j. First, the differential frame generating circuit DF shown in Figure 5(a) generates the following differential frame $d_j(t)$ so that the noise components cancel each other.

$$d_j(t) = r_0(t) - \gamma'_j r_j(t) \tag{22}$$

$$\gamma'_j = \frac{\overline{\tilde{u}_0(t)\tilde{u}_j(t)}}{\sigma_j^2} = \gamma_j \left( \frac{\sigma_0}{\sigma_j} \right) \cdots (23)$$

Here, almost the same object can also be achieved using

$$d_j(t) = \left(\frac{r_0(t)}{\gamma'_j}\right) - r_j(t)$$

If the total noise components of $r_0(t)$ and $r_j(t)$ are absolutely equal to each other, then

$$\sigma_j \fallingdotseq \sigma_0, \quad \left|\dot{\gamma}_j\right| \fallingdotseq \left|\gamma_j'\right| \fallingdotseq 1$$

Considering that $P'_0$ can ordinarily be assumed to be equal to $P'_j$ between nearby frames, the following equation is obtained for the differential frame $d_j(t)$:

$$d_j(t) = \beta_j\sqrt{P'_0}m_0(t) + \Delta x(t) \tag{24}$$

$$\beta_j = b_0 - \gamma'_j b_j \tag{25}$$

$$\Delta x(t) = x_0(t) - \gamma'_j x_j(t) \fallingdotseq \{1 - |\gamma_j|\}x_0(t) \tag{26}$$

$$\gamma'_j \triangleq sgn(\gamma'_j) \cdot 1 \qquad \left|\gamma'_j\right| < 1 \cdots (27)$$

Here, sgn indicates the polarity of the values within parentheses. The approximation on the right term of Eq.(26) is obtain by setting $\sigma_0$ approximately equal to $x_0$, and setting $\sigma_j$ approximately equal to $x_j$ in Eq. (23). As a consequence from Eq.(23) and the approximation of Eq.(26), the power of $\Delta x(t)$ is statistically less than that of $x_0(t)$ with a high probability. Now, assuming that $|\gamma_j| = |\gamma'_j| = 1$, then $\Delta x$ takes approximately 0, and the following equations are obtained for the 0th and jth frame signal polarity $b_0$ and $b_j$:

$$d_j(t) \fallingdotseq 2\sqrt{P'_0}b_0 m_0(t) \qquad (\gamma'_j b_0 b_j < 0, |\gamma_j|=|\gamma'_j|=1) \tag{28}$$

$$\fallingdotseq 0 \qquad (\gamma'_j b_0 b_j > 0, |\gamma_j|=|\gamma'_j|=1) \tag{29}$$

Here, if $|\gamma'_j| > 1$, then some cases in which the polarity of $\beta_j$ in Eq.(25) takes the opposite of the polarity of $b_0$ might occur. Therefore, in order to judge the polarity of $b_0$, according to the conditions of Eq.(27), it is necessary to preserve the polarity, and to set $|\gamma'_j|$ equal to 1. The two types of outputs shown in Eqs.(28) and (29) are generated with a probability of 1/2; in order to have the case of Eq.(28) occur with a probably close to 1, it is sufficient to double the number of received frames in the searching range (in the above example, $2\mu = 256$) when differential frames $d_j(t)$ are made in order to detect $b_0$.
If the equation

$$\overline{m_0(t)m_0(t)} = I$$

is set, then the relationship between $d_j(t)$ and $m_0(t)$ is given by the following equations:

$$\left.\begin{array}{l}\rho_j = \overline{d_j(t)m_0(t)} = \beta_j\sqrt{P'_0} + \xi_j \\[2mm] \xi_j = \overline{\Delta x(t) \cdot m_0(t)}\end{array}\right\} \cdots (30)$$

Here, $\rho_j$ and $\xi_j$ are correlation outputs similar to $w_n$ and $w_{nx}$ in Eq.(13); however, these symbols are used to indicate clearly the values for the differential frames.

Next, the maximum value determination system will be described.

There are numerous j that satisfy Eq.(21) among the $2\mu$ frames; however, in the case of Eq.(31) where the absolute value of $\rho_j$ takes the maximum that is $z_m$, the relationship $x_0(t) \doteqdot \gamma'_j x_j(t)$ and Eq.(28) are satisfied with a high probability; consequently, if the output of the selection and addition circuit $\Sigma$ in Figure 5(a) is set as $z_{n+\mu} = z_m$, and the polarity of the correlation $z_m$ is detected by the hard decision circuit DEC in the same Figure, as a result the polarity of $b_0$ can be detected.

$$z_m = \max\{|\rho_j|\} \tag{31}$$

For $|\gamma'_j|$ 1, the following equation holds true:

$$\Delta \tilde{u}(t) = \{\tilde{u}_0(t) - \tilde{u}_j(t)\} - 0$$

As a result, we obtain

$$\Delta x(t) - 0, \; \xi_j - 0$$

with a high probability. Consequently, from Eq.(28), the SN ratio can be increased probabilistically in the case of

$$\gamma'_j b_0 b_j < 0, \; |\gamma'_j| - 1$$

The important point here is the fact that mutually similar noise components present in the both frames are not contained in the differential frame $d_j(t)$; if the correlation coefficient is $|\gamma_j| \doteqdot 1$, then ideal noise cancellation can be almost achieved. In cases where no frames with $|\gamma_j| \doteqdot 1$ are found, either the number $\mu$ of received frames is too small, or the received power P' varies abruptly within the quasi-stationary time range assumed here. The occurrence frequency of the latter is extremely small.

Next, in order to adapt the cases where the noise correlation between frames is not large enough because of the impossibility of setting a large number of received frames, $\mu$, let us explain so called an average value determining system. For example, if the threshold value of the correlation coefficient is set as $\gamma_{th} = 0.5$, then, providing a threshold value $\rho_{th}$ for the correlation quantity $\rho_j$ of the differential frames $d_j(t)$, and setting the number of the paired received frame with the $0^{th}$ frame satisfying the condition

$$|\rho_J| \geq \rho_{th} \tag{32}$$

as j = J , an average is obtained only for the correlation of the frames satisfying Eq.(32), and this value is designated as the expected value $z_0$.

$$z_0 = \frac{1}{M} \Sigma \rho_J \qquad (|\rho_J| \geq \rho_{th}) \tag{33}$$

Here, M is the number of $\rho_J$ satisfying Eq.(32). In this system, the selection and addition circuit $\Sigma$ shown in Figure 5(a) performs the process of Eq.(32) and (33); furthermore, by setting $z_{n+\mu}$ equal to $z_0$, and applying it to the DEC shown in Figure 5(a) to judge the polarity, the information $b_0$ can be detected. If such a method is used, the high operation can be performed even if the differential frame number ($2\mu$) is reduced.

Let us then explain, the despread alternating-current component determining system, based on the despread alternating-current components obtained by multiplying the differential frames $d_j(t)$ by $m_0(t)$.

The multiplied outputs of $d_j(t)$ and $m_0(t)$ are given by the following equations:

$$u_{dj}(t) = d_j(t) m_0(t) \tag{34}$$

$$\tilde{u}_{dj}(t) = u_{dj}(t) - \rho_j \tag{35}$$

Since the alternating-current component expressed by Eq.(35) is the component orthogonal to $m_0(t)$ among the noise component $\Delta x(t)$ contained in $d_j(t)$, this component can be used as estimated power values of $\Delta x(t)$. By setting an appropriate threshold $P_{th}$, such a frame number that the power $P(\tilde{u}_{dj})$ of $\tilde{u}_{dj}(t)$ satisfies

$$P(\tilde{u}_{dU}) \le P_{th}$$

$$P(\tilde{u}_{dj}) = \frac{1}{T} \int_0^T \tilde{u}_{dj}^2(t)\,dt \Bigg\} \cdots (36)$$

is designated as $j = U$. The $U^{th}$ frame is the candidate frame in which noise is better canceled among plural of j-th frame. If the correlation $\rho_U$ between $d_U(t)$ and $m_0(t)$

$$\rho_U = \overline{d_U(t)m_0(t)} \tag{37}$$

is considered to be the same as the above-described $\rho_j$, and $z_m$ and $z_0$ are determined from Eqs.(31), (32) and (33), then the information $b_0$ can be detected. This is a system which takes the differential frames as determination candidates in cases where the differential frame correlation output alternating-current component takes relatively a small value.

In order to apply this system to real equipment, the decision processing part shown as DP in Fig.5(a) is constructed as shown in Fig.5(b). This circuit is composed of plural of the unit circuit MFB'. The unit circuit is composed of the matching filter circuit MF shown in Fig.5(a) and the square-law circuit which obtain $P(\tilde{u}_{dj})$ from the MF output $\tilde{u}_{dj}(t)$. Furthermore, the selection and addition circuit $\Sigma$ has a function which judges the U frame that satisfies the conditions of Eq.(36) among plural of the j-th frame, and obtains the correlation output $\rho_U$ of Eq.(37), a function which obtains the maximum value $z_m$ among the correlation outputs $\rho_U$, a function which obtains $z_0$ from the correlation outputs $\rho_U$ using Eq.(32) and (33), and a function which sends either $z_m$ or $z_0$ to the hard decision circuit DEC as $z_{n+\mu}$. By using such a construction, it is possible to realize a despread alternating-current component determination system.

Furthermore, as another evaluation measure for limiting the candidate frames, it is possible to use $\sigma_0^2$ and $\sigma_1^2$ in Eq.(20) as the power of the despread alternating-current components of the $0^{th}$ frame and $l^{th}$ frame. In other words, in this method, some combined frames which satisfy the conditions of Eqs.(21) and (32) are selected out of the combined frames which satisfy $\sigma_0^2 \doteq \sigma_1^2$, and the above-described expected values $z_0$ and $z_m$ are obtain from them.

In order to realize the noise cancellation function of the present invention, $\gamma_l$ and $\gamma'_l$ in Eq.(19) and (23) are used; and wherein $\gamma_l$ does not represent the correlation coefficient between in-phase noise components on the combined frames but the expected value thereof. Consequently, there is no guarantee that noise cancellation can be accomplished using them. However, the cancellation of in-phase noise components statistically can be achieved with a high probability, by using the threshold values $\rho_{th}$ and $P_{th}$ and evaluation functions $z_m$ and $z_0$ as described above.

Next, the double differential frame detection system which applies a second despreading to the differential frames $d_j(t)$ will be described. The following mutual correlation is determined for $\tilde{u}_{dj}(t)$ in Eq.(35) and the despread alternating-current component $\tilde{u}_R$ of the $R(\ne j)^{th}$ frame $r_R(t)$ by the same method as that used for Eq.(19):

$$\gamma_R = \frac{\tilde{u}_{dj}\tilde{u}_R}{\sigma_{dj}\sigma_R} \tag{38}$$

The difference between two frames $d_j(t)$ and $r_R(t)$ for which this correlation $\gamma_R$ takes a large value is selected in the same manner as in Eq.(22), and the double differential frame $d_{dj,R}(t)$ is made.

$$d_{dj,R} = d_j(t) - \gamma'_R r_R(t) \tag{39}$$

$\gamma'_R$ has the same definition as Eq.(23). $z_m$ or $z_0$ is determined by applying the processing of Eqs.(30) through (33) to this double differential frame. Alternatively, $z_m$ or $z_0$ is determined by applying the processing of Eqs. (34) through (39) to $d_{dj,R}(t)$. More accurate detection of the information $b_0$ can be realized by this method.

In the above description, the received input $r(t)$ is assumed to have a base band waveform. In mobile communications, however, the actual transmission waveform used is a band-pass waveform obtained by PSK modulation of the carrier wave $f_0$ by the square-wave spread waveform $m(t)$ shown in Fig.4, as illustrated in Fig.1. Therefore, if this band-pass received waveform is demodulated and filtered using the local carrier wave $f_L = f_0$, the signal component $m(t)$ sent out from the transmittor can be obtained as the signal component of the demodulated output. However, this waveform is not the square wave shown in Fig.4, but rather has a limited band.

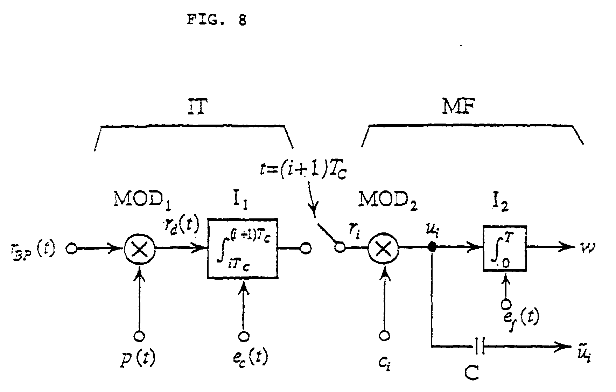

Next, one frame of the band-pass received waveform will be designated as $r_{BP}(t)$, and the method used to obtain the impulse train $m_l(t)$ of the spread code in Fig.4 from the signal component contained in $r_{BP}(t)$ will be described using Fig.8 in which the frame number n is omitted.

The demodulated output $r_d(t)$ is obtained by multiplying the local carrier waver $p(t)$ of the same frequency and the same phase as the transmittor carrier waver $f_0$ (reception side phase $\theta$) and one frame $r_{BP}(t)$ of the band-pass received waveform, by the multiplier $MOD_1$. This demodulated output $r_d(t)$ is integrated for each chip period by the integrator $I_1$ using the chip timing pulse $e_c(t)$, thus producing the i-th impulse $r_{0i}$ indicated by the following equations.

$$r_{0i} = \frac{1}{T_c} \int_{iT_c}^{(i+1)T_c} r_{BP}(t)p(t)dt \tag{40}$$

$$p(t) = \sqrt{2} \cos(2\pi f_0 t + \theta) \tag{41}$$

From this, the 0th frame signal can be expressed as the impulse train $r_0 = \{r_{0i}\}$ for one frame consisting of L impulses $r_{0i}$ (i = 0, 1, 2, ... L-1). (Below, the frame signal will be expressed with the t of $r_0(t)$ omitted.)

If no noise is contained in the signal $r_{BP}(t)$ of one frame of the band-pass reception waveform, and it is assumed that $b_0\sqrt{P'} = 1$, then $\{r_{0i}\}$ is more or less equal to $m_1(t) = \{c_i\}$ shown in Figure 4. The slight phase difference with $m_l(t)$ is a distortion component based on the band restriction; and this is treated as a part of the noise. The above-described distortion arising from the band restriction can be avoided by using a sampling function waveform modulation/demodulation system in which the respective chip impulses of the spread impulse sequence $\{c_i\}$ are caused to correspond to a sampling function waveform, thus creating transmission frames $s(t)$, and correlation demodulation is performed using the same waveform at each chip position of the reception signal. If this system is used, then $\{r_{0i}\}$ in the case of no noise (i. e., in a case where $b_0\sqrt{P'} = 1$) coincides with the code sequence $\{c_i\}$, and the demodulation processing can be accurately performed through the intermediary-ship of an impulse train. (Reference Literature: N. Kuroyanagi, N. Suehiro, K. Ohtake, M. Tomita and L. Guo, "A Narrowband Multi-ary FSK Transmission Principle Using Sampling Function Waveform Modulation", IEEE 4th ISSS TA'96, TE4 (1996-09)).

Here, considering that noise is actually contained in the signal $r_{BP}(t)$ of one frame of the band-pass reception waveform, when the impulse train demodulation system is used for the nth reception frame, the base band reception waveform produced on the output side of the integrator $I_1$ can be expressed by the following equations:

$$r_n(t) = \sum_{i=0}^{L-1} r_{ni}\delta(t - iT_c) \tag{42}$$

$$x_n(t) = \sum_{i=0}^{L-1} x_{ni}\delta(t - iT_c) \tag{43}$$

$$r_{ni} = \sqrt{P'}\, b_n c_i + x_{ni} \tag{44}$$

In the circuit shown in Figure 8, a matching filter MF consisting of the multiplier $MOD_2$, integrator $I_2$ and capacitor C is installed as an after-stage. Here, the multiplied outputs $\{u_i\}$ obtained by the chip base, the alternating-current components $\{\tilde{u}_i\}$ of the outputs, and the correlation output w of the frame base, are determined by using the spread sequence $\{c_i\}$ and the frame timing pulses $e_f(t)$. Furthermore, exactly the same function could also be accomplished by placing the multiplier $MOD_2$ in front of the multiplier $MOD_1$ (with respect to the Figure), and performing reverse spread first.

From the relationships of Equations (18), (23) and (24), it is desirable that the number of reception frames combined, i. e., $2\mu$, be set so that

$$2\mu > 4^k \tag{45}$$

in order to obtain sufficiently large inter-frame correlation coefficients $\gamma_j$ and $\gamma'_j$. As the number of interfering stations K increase, $2\mu$ increases so that there is a corresponding increase in the amount of demodulation processing. Furthermore, even under conditions which satisfy the above equations, there is no absolute guarantee that large correlation coefficients will be determined. This problem can be solved by using the reception chip impulse moving system described below.

Next, the reception chip impulse moving system will be described.

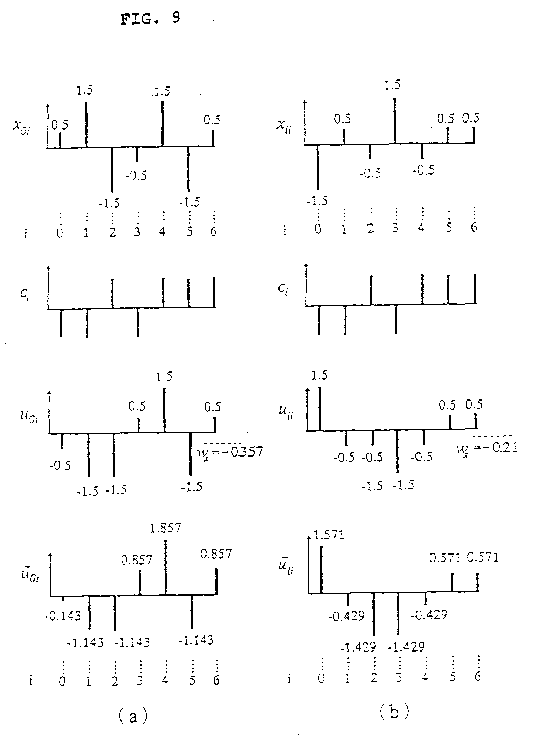

Here, the case of a conversion of the reception frames into a chip impulse train $\{r_{0i}\}$ by means of the circuit shown in Figure 8 will be considered. Now, considering the n = 0th reception frame and n = lth reception frame $r_0$ and $r_l$, and further assuming that $\sqrt{P_k} = v$ and k = 0,1,2,3 in Equation (17), then interfering waves of equal power (reception chip voltage $\pm V$) will be received from the three interfering stations. Considering for the sake of simplicity a case in which interfering waves with mutually matched chip phases are received, the chip voltage of the overall interfering wave adopts four different values, i. e., $\pm V$ and $\pm 3V$. A case in which the noise components $x_{0i}$ and $x_{li}$ (i = 0, 1, 2, ... L- l, L = 7) of the chip impulses $r_0$ and $r_l$ are given as shown in Figure 9 will be considered as this type of noise. (Furthermore, for the sake of simplicity, the indication of the signal components $\sqrt{P'}b_n c_i$ is omitted.)

$c_i$ in the same Figure is the reverse spread sequence. If the matching filter (correlator) MF shown in Figure 8 is used, the reverse spread output impulses $u_{0i}$ and $u_{li}$ shown in Figure 9, and the alternating-current components $\tilde{u}_{0i}$ and $\tilde{u}_{li}$ of such impulses, are determined from the above-described parameters. As will be described later, the correlation coefficients of both alternating-current components are small in this example.

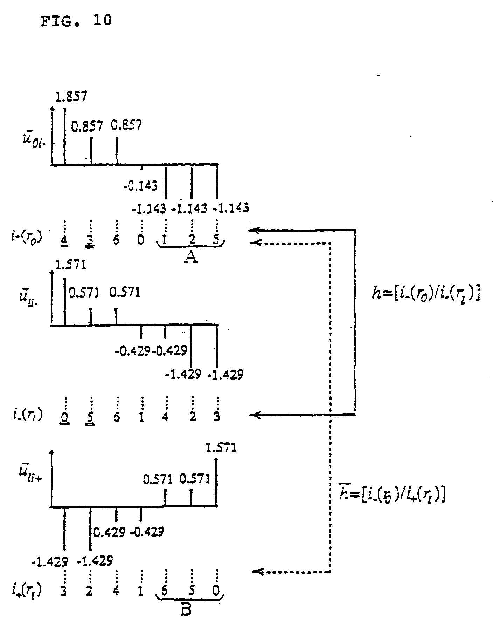

Next, considering the respective polarities of $\tilde{u}_{0i}$ and $\tilde{u}_{li}$, if these are arranged in the order of magnitude [large(+) → small(+) → small(-) → large(-)], then $\tilde{u}_{0i-}$ and $\tilde{u}_{li-}$ with the order of chip numbers $i\_(r_0)$ and $i\_(r_l)$ shown in Figure 10 are obtained. The symbol indicating the new chip position of $r_l$ is h. The mapping of movement is realized by causing $i\_(r_l)$ on the same chip position numbers θ (θ = 0, 1, 2, ... L -1) to correspond to $i\_(r_0)$ in the arrangement order map shown in Figure 10. In other words, an operation in which $i\_(r_l)$ on the same θ is moved to h = $i\_(r_0)$ is expressed as follows:

$$h = [i\_(r_0) / i\_(r_l)]_\theta \tag{46}$$

Looking at the chip ranking of θ = 0 in Figure 10, the indication of 4 and 0 in the Figure means that $i\_(r_0)$ = 4 and $i\_(r_l)$ = 0. Accordingly, $r_{l0}$ is moved to $r_{l4}$. In a case where θ = 1, from the indication of 3 and 5 in the Figure, $r_{l5}$ is moved to $r_{l3}$. Even if this movement in the order of the chip positions ($r_{li} \to r_{lh}$) is performed, the following polarity change based on the code of the spread sequence is necessary in order to maintain the signal components of $r_{lh}$ equal to those of $r_{li}$.

$$r_{lh} = c_i c_h r_{li} \tag{47}$$

In the case of no noise, the lth corrected reception frames $r_l(h)$ produced by the movement of the chip impulses based upon the above equation and the signal components of $r_l(i)$ are equal, and are both $\{b_l\sqrt{P'c_i}\}$.

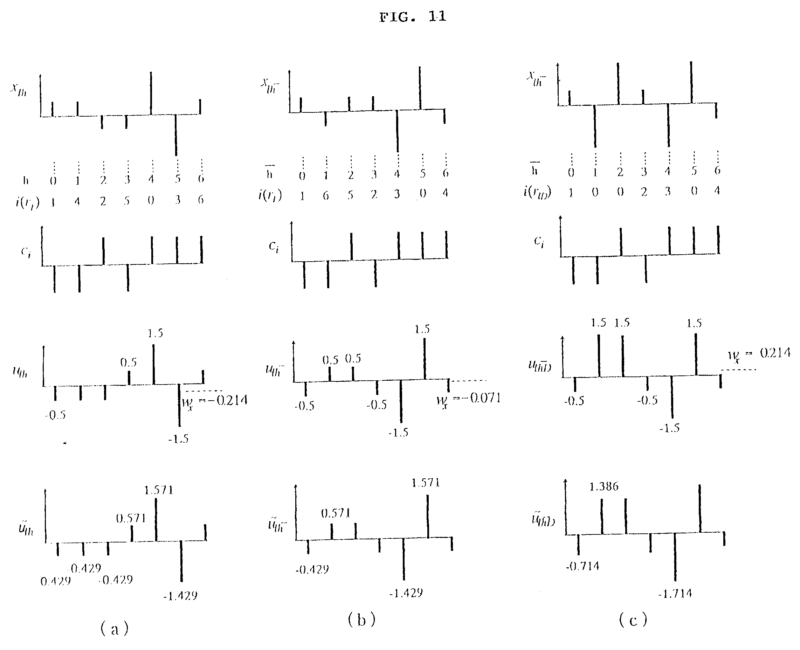

Considering this with the signal components removed for simplicity, $x_{lh}$ is determined by the above-described principle, and the output of the matching filter MF shown in Figure 8 is determined using the reverse spread sequence $c_h$ (= $c_i$). The results are shown in Figure 11(a).

Meanwhile, if the order of arrangement of $\tilde{u}_{li}$ by size is reversed, then $\tilde{u}_{li+}$ shown in Figure 10 is obtained. If $\tilde{u}_{0i-}$ and $\tilde{u}_{li+}$ are caused to correspond on the same chip ranking θ, then the chip number constituting the movement destination of $i(r_l)$ can be expressed as follows:

$$\bar{h} = [i\_(r_0)/i_+(r_l)]_\theta \tag{48}$$

Using this relationship, the chip movement ($r_{li} \to r_{l\bar{h}}$) is performed, thus producing the corrected frame $r_l(\bar{h})$. In this case as well, the relationship

$$r_{l\bar{h}} = c_i c_{\bar{h}} r_{li} \tag{49}$$

is necessary in order to maintain the polarity of the signal components. The correlation coefficient $\gamma_l(\bar{h})$ between $\tilde{u}_0$ and the impulse train $\tilde{u}_l(\bar{h})$ obtained by the above movement of the arrangement generally has a polarity that is the reverse of the polarity of $\gamma_l(h)$. The two types of movement of the arrangement described above, and the associated correlation processing, are performed for the frames $r_l$ containing the noise $x_{li}$ shown in Figure 9; the reverse-spread output impulse trains obtained as a result are shown in Figures 11(a) and 11(b).

Next, corrected differential frames $d_l(h)$ and $d_l(\bar{h})$ are produced using these two types of frames $r_l(h)$ and $r_l(\bar{h})$. $d_l(h)$ is given by the following equations:

$$d_l(h) = r_0 - \gamma_l'(h)\, r_l(h) = \sum_{i=0}^{L-1} d_{li}(h)$$

$$d_{li}(h) = r_{0i} - \gamma_l'(h)\, r_{li}(h)$$

$$\gamma_l'(h) = \frac{\overline{\tilde{u}_0 \tilde{u}_l(h)}}{\sigma_l^2}$$

$$r_0 = \sum_{i=0}^{L-1} r_{0i}\, \delta\left(t - iT_C\right)$$

$$r_l(h) = \sum_{i=0}^{L-1} r_{li}(h)\, \delta\left(t - iT_C\right)$$

$$\Bigg\} \cdots (50)$$

The expression of the differential frames $d_l(\overline{h})$ is also similarly obtained.

The correlation coefficients for these differential frames when $j = l$ in Equations(19) and (23) is as follows:

$$\gamma_l = \frac{\overline{\tilde{u}_0 \tilde{u}_l}}{\sigma_0 \sigma_l} = -0.35, \qquad r_l' = -0.038$$

$$\gamma_l(h) = \frac{\overline{\tilde{u}_0 \tilde{u}_l(h)}}{\sigma_0 \sigma_l} = 0.924, \qquad r_l'(h) = 1.150 \ (\rightarrow 1.0)$$

$$\gamma_l(\overline{h}) = \frac{\overline{\tilde{u}_0 \tilde{u}_l(\overline{h})}}{\sigma_0 \sigma_l} = -0.904, \qquad r_l'(\overline{h}) = -1.125 \ (\rightarrow -1.0)$$

$$\Bigg\} \cdots (51)$$

(Here, $\sigma_0$ and $\sigma_l$ are given by Equation (20). Furthermore, the values 1 and -1 of $\gamma_l'(h)$ and $\gamma_l'(\overline{h})$ are corrections based on Equation (23).) Consequently, as a result of chip movement, the correlation coefficients shows an increase in proportion to $\gamma_l$ in Equation (19). Furthermore, the relationship of the following equation ordinarily holds true.

$$|\gamma_l(h)|, \ |\gamma_l(\overline{h})| > \gamma_l \qquad (52)$$

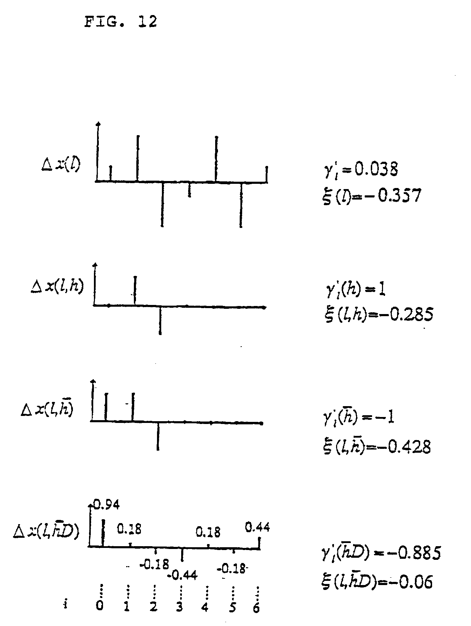

The differential frames in a case where there is no alteration of the order of arrangement are shown along with the noise components of the differential frames created using $x_{li}$ in Figure 9 and Figures 11(a) and 11(b) as $\Delta x(l)$, $\Delta x(l,h)$ and $\Delta x(l,\overline{h})$ in the upper three levels of Figure 12. In this example, most of the noise that is contained in both frames is canceled at a majority of the chip points. In general, there is no guarantee that cancellation will be completely accomplished by this method; however, it is clear that there is a possibility of increasing the cancellation effect by altering the order.

Next, a reception chip impulse multiple utilization system used as a means of causing the absolute value of the expected value $\gamma_l$ to further approach 1 in order to increase the correlation coefficient of the noise $x_0$ and $x_l$ of the two frames will be described using the paired reception frames shown in Figure 11 as an example. The arrangements of the reverse spread alternating-current components for $r_0$ and $r_l$ in order of magnitude are shown respectively as $\tilde{u}_{0i-}$ and $\tilde{u}_{li+}$ in the upper level of Figure 10. In order to further heighten the correlation values (absolute values) of both, it is sufficient to make a redundant selection of $\tilde{u}_{l\theta}$ from among $\tilde{u}_{li+}$ so that the equations

$$\Delta_\theta = |[[|\tilde{u}_{0i}| - |\tilde{u}_{li+}|]_\theta]| - \min \qquad (53)$$

$$\tilde{u}_{0i}\tilde{u}_{li-} < 0 \qquad (54)$$

holds true for $\tilde{u}_{0i\text{-}}$ and $\tilde{u}_{li+}$ on the same chip position $\theta$. Equation (54) is a conditional equation that should hold true in cases where the arrangement $\overline{h}$ is determined. (In cases where the arrangement h is determined, the signs of the same equation are reversed.) If this principle is applied to $\tilde{u}_{li+}$ in Figure 10, then both chips in which $i_+(r_l) = 6$ and 5 can be represented by the chip in which $i_+(r_l) = 0$. [6, 5, 0/B on i + $(r_l)$ in the Figure]. In other words, in the conversion of $\overline{h}$, a multiple utilization is done for $r_{l0} \rightarrow r_{l1}$, $r_{l2}$, $r_{l5}$ [1,2,5/A on i - $(r_0)$ in the Figure]; as a result, $r_{l5}$ and $r_{l6}$ are not used. In regard to the arrangement order of $\tilde{u}_{li+}$ in this case, if D is used as a multiple utilization arrangement symbol, then we obtain the following:

$$i_{+D}(r_l) : 3, 2, 4, 1, 0, 0, 0$$

If this is used to indicate the frame noise $x_{l\overline{h}D}$ and reverse spread power values $u_{l\overline{h}D}$ and $\tilde{u}_{l\overline{h}D}$, the result obtained is as shown in Figure 11(c). If the correlation coefficients are obtained on this basis, the following values are obtained:

$$\gamma_l(\overline{h}\,D) = -0.951, \quad \gamma_l'(\overline{h}\,D) = -0.885$$

The noise component $\Delta x_l(\overline{h}D)$ of $d_l(\overline{h}D)$ is determined; and the result is shown in the lowermost portion of Figure 12. Compared to $\gamma_l(\overline{h})$ and $\gamma_l'(\overline{h})$, the variation in correlation coefficients determined by the multiple utilization of chips is small; however, the noise power of the differential frames is greatly reduced. Meanwhile, if the correlation amounts $|\xi|$ of the noise are compared, the following results are obtained (as shown in Figure 12):

$$|\xi_{(l,h)}| < |\xi_{(l)}|$$

$$|\xi_{(l,\overline{h})}| > |\xi_{(l)}|$$

$$|\xi_{(l,\overline{h}D)}| < |\xi_{(l)}|$$

In cases where $\gamma_l(h)$ and $\gamma_l(\overline{h}D)$ are used, these contribute to the reduction in $|\xi|$, with the effect being especially great in cases where the latter is used. Furthermore, although the results are not shown, a great effect can also be obtained using $\gamma_l(hD)$.

However, in cases where $\gamma_l(\overline{h})$ is used, $|\xi|$ is conversely increased. Accordingly, this multiple utilization is especially effective as a means of further reducing $\xi_j$ in Equation (30). However, since there are also cases in which $|\xi|$ increases even if candidate differential frames are created using the above-described method, it is necessary to select and utilize candidates with a large improving effect in probabilistic terms from the above candidates as described in Equations (21) through (38). Specifically, the $\gamma_l(h)$, $\gamma_l(\overline{h})$, $\gamma_l(hD)$ and $\gamma_l(\overline{h}D)$ determined here are determined by varying the frame number l; then, among these, the candidate frames $r_j(h)$, etc., that satisfy Equation (21) are determined; and further in these, the candidate frames $r_j(h)$ or $r_U(h)$ that satisfy Equation (32) or Equation (36) are selected. Using differential frames with these candidate frames, $z_m$ or $z_0$ is determined from Equation (31) or Equation (33) by means of the method described above. If hard decision processing is performed, the information $b_0$ of the desired reception frames $r_0(t)$ can be ascertained and detected with a high degree of precision. This system makes it possible to achieve a great decrease in the search range $2\mu$; accordingly, this system is especially effective for communications between high-speed moving bodies.

Furthermore, in the above example, a case of multiple use of the chips of the combined frames $r_l$ is described; however, since this method maintains the signal components in an unchanged state, multiple use is also possible for $r_0$. Accordingly, by allowing multiple use and movement of chips for both $r_0$ and $r_l$, it is possible to provide a means of obtaining a further statistical increase in the correlation between the contained noise $x_0$ and $x_l$. Furthermore, if an arrangement order map of h and $\overline{h}$ is used, both $\gamma_l(h)$ and $\gamma_l(\overline{h})$ which are of mutually opposite polarity are obtained. If the absolute values are large, Equation (28) can be satisfied to a high degree of approximation by one of these. In other words, the number of combined frames that can be utilized can be further increased by means of the polarity altering function of $\gamma$.

Thinking in more general terms, instead of using the arrangement order patterns shown in Figures 11 and 12 when determining h, $\overline{h}$, hD and $\overline{h}D$, it would also be possible to use a method in which one pattern among the chip arrangement order patterns of $\tilde{u}_l(h)$ is designated as h', the correlation coefficients $\gamma_l(h')$ for h' are determined, and one to several candidates closest to $|\gamma_l(h')| = 1$ among all of the patterns are selected. In this method, however, the amount of processing required is large compared to that required in the method using the algorithm which utilizes an arrangement order map.

Both the reception chip movement system and the reception chip multiple utilization system can be concretely realized by including the chip position alteration function in the differential frame generating circuit shown in Figure 5(a).

Next, a transmission system in which the carrier wave $e_p(t)$ is modulated by the even-numbered frames and a carrier wave $e_q(t)$ which has a phase orthogonal to $e_p(t)$ is modulated by the odd-numbered frames when the carrier wave is modulated by the base band transmission signal, so that in-phase wave (p wave) components and orthogonal wave (q wave) components are alternately positioned will be described as another embodiment of this invention.

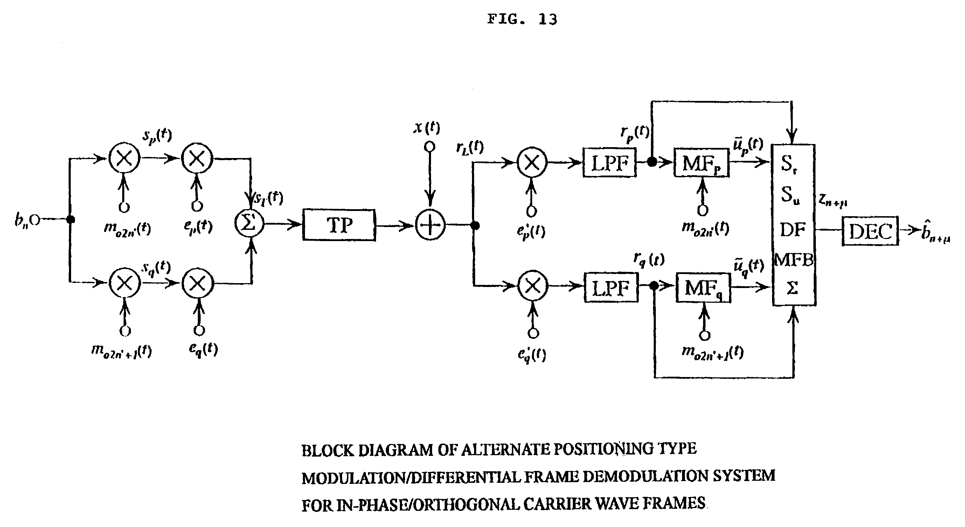

Figure 13 is a structural diagram of a transmission system which uses a in-phase/orthogonal carrier wave frame alternate positioning type modulation system and a differential frame demodulation system. $m_{2n'}(t)$ and $m_{2n'+1}(t)$ shown in the Figure are even-numbered and odd-numbered M sequence given by the following equations:

$$m_{2n'}(t) = m_0 \{t - 2n'T\} \tag{55}$$

$$m_{2n'+1}(t) = m_0 \{t - (2n' + 1)T\} \tag{56}$$

Furthermore, where $\omega_a$ ($>>2\pi f_c$) is the angular frequency, the carrier waves can be expressed as follows:

$$e_p(t) = \sqrt{2} \cos \omega_a t \tag{57}$$

$$e_q(t) = \sqrt{2} \cos (\omega_a t - \frac{\pi}{2}) \tag{58}$$

In the transmitter TX, the binary data b successively modulates the even-numbered and odd-numbered M sequence, thus creating base band transmission signals $s_p(t)$ and $s_q(t)$. The transmission signals $s_p(t)$ and $s_q(t)$ respectively modulate the carrier waves $e_p(t)$ and $e_q(t)$, and a transmission wave $S_T(t)$ is produced by synthesizing these modulated outputs.

Meanwhile, in the receiver RX, local carrier waves $e'_p(t)$ and $e'_q(t)$ which match the phase and frequency (contained in the reception wave) of Equations (57) and (58) are prepared by a carrier wave synchronization technique. The reception signals $r_L(t)$ are subjected to coherent modulation by these $e'_p(t)$ and $e'_q(t)$, thus producing $r_p(t)$ and $r_q(t)$. Since the carrier waves $e_p(t)$ and $e_q(t)$ are orthogonal to each other, no $s_q(t)$ components are contained in $r_p(t)$, and no $s_p(t)$ components are contained in $r_q(t)$.

Accordingly, the band-pass reception signals $r_p(t)$ and $r_q(t)$ are respectively waveforms that are positioned in every other frame. Consequently, the demodulated outputs $u_p(t)$ and $u_q(t)$ of the following $MF_p$ and $MF_q$ are unaffected by adjacent frames.

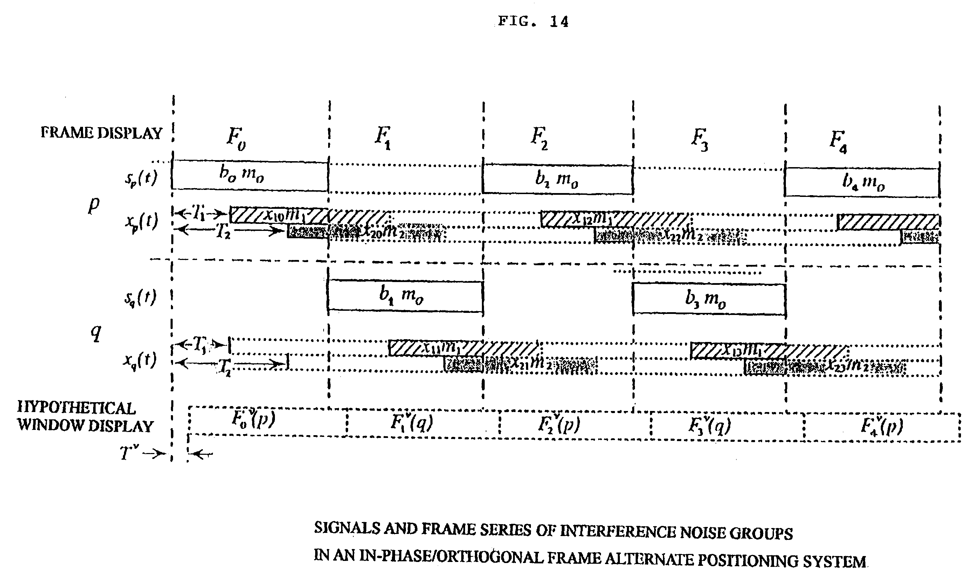

We will now consider a case in which the difference between the carrier wave phase of the reception signal from the desired station and the carrier wave phase of the reception signal from an interfering station is 0 ($\Delta\phi = 0$). The reception signal in this case is constructed from $s_p(t)$ and $s_q(t)$, and the noise components $x_p(t)$ and $x_q(t)$; and one example of the frame chart is shown in Figure 14. Among the interfering waves shown in the Figure, the portions indicated by broken lines do not contribute to the demodulated correlation output (as will be described later). In the case of $MF_p$ in Figure 13, only the portions contained in the even-numbered frames $F'_{2n'}$ of the interfering wave among the components $x_q(t)$ which have the same phase as the p wave in the interfering wave components $x_p(t)$ are multiplied by $m_{0,2n'}(t)$, thus creating the interfering wave components $u_{px}(t)$ in the outputs $u_p(t)$. (The same relationship exists for $x_q(t)$ as well.)

Now, x(t) is assumed to the incoming signal from one interfering station, the spread M sequence is assumed to be $m_I(t)$, and the amplitudes are assumed to be $x_{I,2n'}$ and $x_{I,2n'+I}$. In such a case, the in-phase waves and orthogonal waves of x(t) are give by the following equations.

$$x(t) = x_p(t) + x_q(t) \tag{59}$$

$$x_p(t) = \sum_{n=-\infty}^{\infty} x_{I,2n'} m_I(t - T_1 - 2n'T) \tag{60}$$

$$x_q(t) = \sum_{n=-\infty}^{\infty} x_{I,2n'+I} m_I \{t - T_1 - (2n' +1)T\} \tag{61}$$

Here, if $T_1 \geq 0$, then

$$u_{px}(t) = x_p(t)m_o(t - 2n'T) \qquad T_1 \leq (t - 2n'T) \leq T \qquad (62)$$

$$u_{qx}(t) = x_q(t)m_o\{t - (2n' + 1)t\} \qquad T_1 \leq \{t - (2n' + 1)T\} \leq T \qquad (63)$$

On the other hand, if $T \leq 0$, then

$$u_{px}(t) = x_p(t)m_o(t - 2n'T) \qquad 0 \leq (t - 2n'T) \leq (T + T_1) \qquad (64)$$

$$u_{qx}(t) = x_q(t)m_o\{t - (2n' + 1)t\} \qquad 0 \leq \{t - (2n' + 1)T\} \leq (T + T_1) \qquad (65)$$

If the correlation outputs $\tilde{u}_{px}(t)$ and $\tilde{u}_{qx}(t)$ of these are determined, and the alternating-current components and reception inputs $r_p(t)$ and $r_q(t)$ are applied to the same processing circuits $s_r$, $s_u$, DF, MFB and $\Sigma$ as in Figure 5(a), the evaluation constants $z_{n+\mu}$ can be determined in accordance with the above-described principle, and the $0(= n + \mu)^{th}$ frame information $b'_{n+\mu}$ can be determined. The correlation time widths between the noise sequence given by Equations (59) through (65) and the spread sequence of the desired station are generally shorter than 1 period T.

In other words, partial correlations (non-periodic correlations) are obtained. The correlation time width varies according to $T_k$; however, the mean value is T/2. Accordingly, the power of the noise interfering with the signal in the detection process of the demodulated output is statistically reduced by half by the alternate positioning of **p** and **q** waves. Furthermore, the same also holds true in cases where the carrier wave phase difference between the desired wave and the interfering wave, i. e, $\Delta\phi$, is equal to $h\pi/2$ (h: integer). In cases where $\Delta\phi$ has a common value, a component of the interfering wave projected onto $e'_p(t)$ and a component projected onto $e'_q(t)$ have an effect; in this case, therefore, the interfering power is comparable to that in an ordinary system.

Meanwhile, in regard to the partial correlation between different types of M sequence, the phase difference between both sequence is T/2; and as a result, the correlation tends to reach a maximum when the correlation time width is T/2. However, if the cyclic phases of the respective M sequence are appropriately selected, a code can be constructed so that these partial correlation values have almost no relation to the phase difference between both sequence.

Accordingly, the fact that the demodulation and detection characteristics of the p/q alternate positioning system are governed by the partial correlation between the sequence is not a great problem. Two interference frames of the $k^{th}$ interfering station are generally included in the $n^{th}$ reception frame interval $F_n$ of the desired station. The correlation between the interference pattern and the spread sequence of the desired station in a case where the information $b_{kn}$ of these interference frames and the information $b_{kn+l}$ of an adjacent frame are equal to each other is called an "even correlation"; and the correlation in a case where the above information components are different is called an "odd correlation". Many spread codes such as the Gold code, etc., are designed so that the even function is small; accordingly, the odd correlation is inevitably increased. However, in the case of a p/q alternate positioning system, there is in most cases no effect of adjacent frames, so that the frequency with which odd correlations are generated is cut in half compared to an ordinary system. As a result, a deterioration in the demodulation SN ratio caused by odd correlations, which is a major impediment in cases where a sequence such as a Gold code, etc., is used, can be avoided.

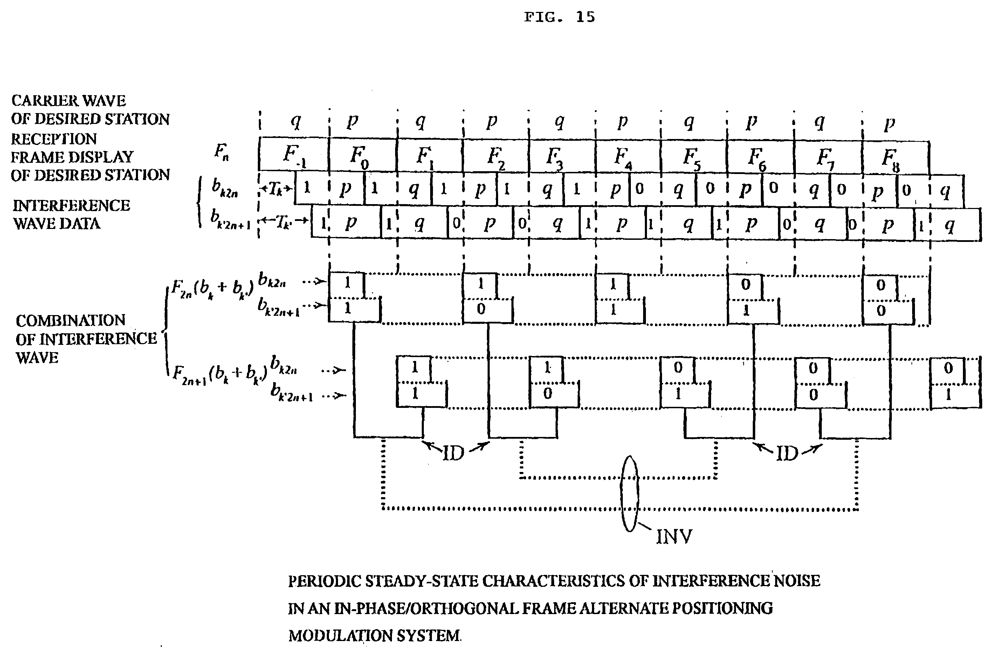

Another important point is that a p/q alternate positioning system has the effect of conspicuously increasing the probability that the noise of the $0^{th}$ frame and adjacent frames will be similar or will more or less coincide. In other words, since adjacent frames have no effect, the types of noise frames in the case of two interfering stations will be as shown in Figure 15 if analysis is performed using the same method as that shown in Figure 7.

ID in the Figure indicates the same pattern, while INV indicates a pattern of the inverse polarity. If both ID and INV are viewed as being the same, then the probability that the same noise pattern will be generated is given by the following equation instead of Equation (18):

$$p_x = 2(2^{-K}) \qquad (66)$$

From the above equation, $p_x$ is $2^k$ times larger than in Equation (11). Accordingly, the following advantage is obtained: i. e., the number of differential frames to be created ($2\mu$) can be decreased by $2^{-k}$ times.

In the above description, **p** and **q** waves were produced by selecting the phase of the carrier wave. In this case, it is necessary to prepare a local carrier wave with an accurate phase on the receiver side, and to perform coherent demodulation. Accordingly, an example of application to a non-coherent demodulation system which can be realized by means of a simpler apparatus using a local carrier wave with an arbitrary phase will be shown.

First, **p** and **q** waveforms of spread sequence used for station k with phases differing from each other by $(\pi/2)$ in the base band region are expressed by the following equations:

$$m_{kp}(t) = m_k(t) \qquad (67)$$

$$m_{kq}(t) = \frac{1}{2\pi} \int_{-\infty}^{\infty} F\{m_{kp}(t)\} \exp\left(j\omega t - \frac{\pi}{2}\right) d\omega \qquad 0 \le t \le T \cdots (68)$$

Here, F is a transform symbol for performing DFT, and $m_{kp}(t)$ is the same as $m_k(t)$.

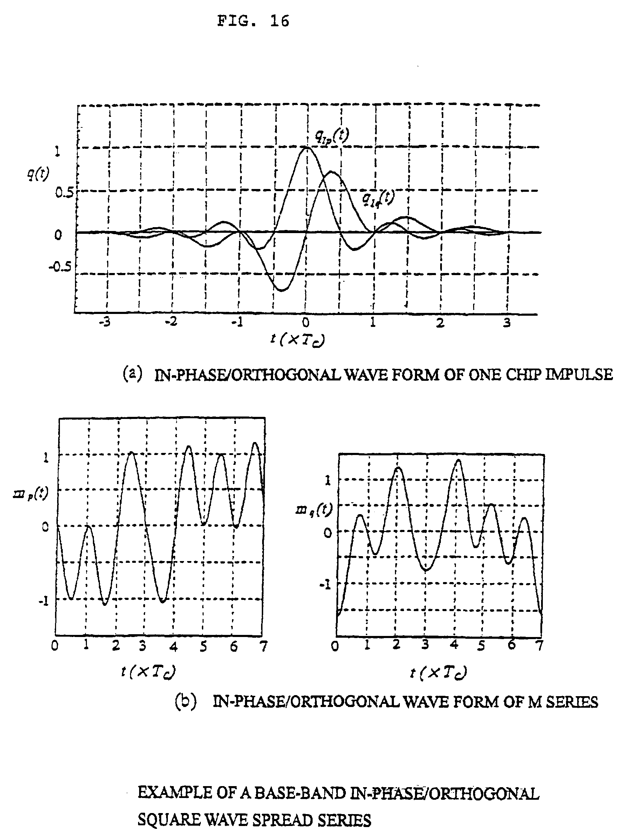

Meanwhile, $m_{kq}(t)$ is a waveform for one frame which is obtained by subjecting $m_{kp}(t)$ to DFT, and performing reverse DFT on the components obtained by shifting the phases of the resulting respective frequency components by $(\pi/2)$. The **p** and **q** waves for the chip impulses are shown in Figure 16(a), and the **p** and **q** waves for one frame according to the above equations are shown in Figure 16(b). In the present example, these waveforms are band-restricted to $f \le 2f_c$ in order to facilitate understanding. (Ordinarily these are restricted to $f \le f_c$). A transmission signal is created by successively switching these **p** and **q** waveforms for each frame. In cases where such base band in-phase/orthogonal waves are used, the phase of the carrier wave used for conversion to a wireless frequency can be arbitrarily set on the reception side.

The differential phase shift keying system (DPSK) is a system in which information is differentially encoded on the transmission side, after which two base band waveforms demodulated using carrier waves of arbitrary phases that are orthogonal to each other are respectively detected following a delay on the reception side, and the original information that is transmitted is recovered by subjecting a synthesized output obtained by adding these detected outputs to a hard decision process.

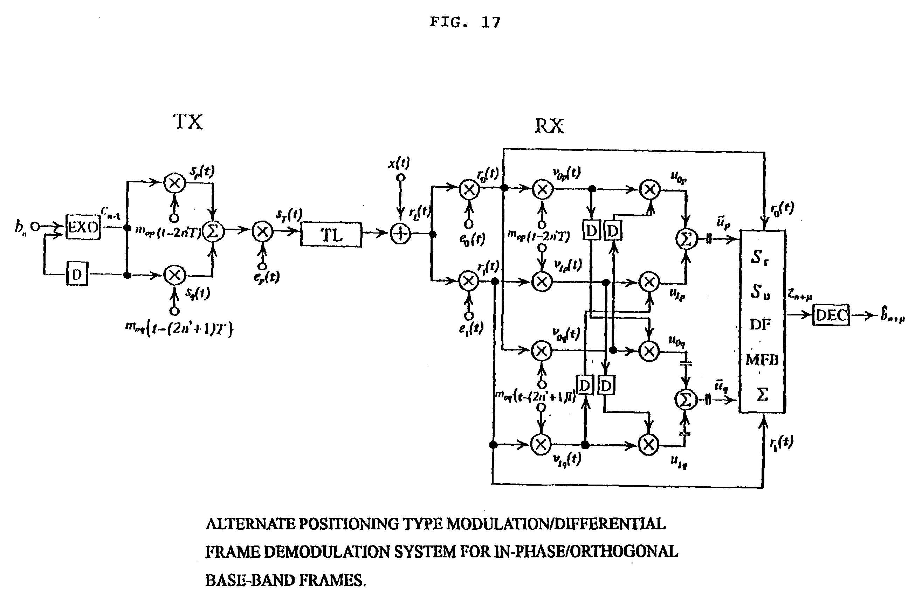

As is shown in Figure 17, the above-described principle can be applied to a modulation/demodulation system in which in-phase/orthogonal base band frames are alternately positioned. In the Figure, D indicates a delay element for one frame; the symbols in the remaining blocks are the same as in Figure 5(a). As shown in the Figure, in the transmitter TX, the $n^{th}$ information $b_n$ that is to be transmitted is differentially encoded beforehand according to the following equation, thus producing an output $c_n$.

$$c_n = \overline{c_{n-1}+b_n} \tag{69}$$

The in-phase spread sequence $m_{0p}(t - 2n'T)$ determined with k set equal to 0 in Equations (67) and (68) is modulated by means of this output $c_n$, thus creating even-numbered frames. Furthermore, the orthogonal spread sequence $m_{0q}\{t - (2n'+1)T\}$ is modulated, thus creating odd-numbered frames. These sequence modulated by the data b modulate one type of carrier wave $e_p(t)$, thus creating transmission signal $S_T(t)$ in the wireless frequency band, and this is sent out to the transmission path.

$$S_T(t) = \sqrt{2P_0}\, s_0(t) \cos \omega_a t \tag{70}$$

$$s_0(t) = \sum_{n'=-\infty}^{\infty} b_{2n'} m_{0p}(t - 2n'T) + \sum_{n'=-\infty}^{\infty} b_{2n'+1} m_{0q}\{t - (2n'+1)T\} \tag{71}$$

Here, $P_0$ is the transmission power, and $s_0(t)$ is the base band signal waveform of the desired station. The receiver RX receives $r_L(t)$, which consists of a signal that is more or less the same as $s_T(t)$ (only the power is $P'_0$), and noise. $r_L(t)$ is given by the following equation as the sum of the signal of the desired station and interfering noise. (For the sake of simplicity, white noise, which ordinarily has a small power compared to interfering wave noise, is omitted from the description.)

$$r_L(t) = s_L(t) + x_L(t) \tag{72}$$

$$= \sqrt{2P'_0}\, s_0(t) \cos \omega_a t + \sum_{k-1}^{K} \sqrt{2P'_k}\, s_k(t) \cos(\omega_a t - \theta_k)$$

Here, $P'_0$ is the reception power of the signal of the desired station, and $P'_k$ ($k \ne 0$) is the power of the incoming noise from the interfering station k; and $s_k$ ($k \ne 0$) is the base band signal waveform transmitted by the interfering station and is given by the following equation: (For the sake of simplicity, white noise is omitted from the description here.)

$$s_k(t) = \sum_{n'=-\infty}^{\infty} b_{2n'} m_{kp}(t - T_k - 2n'T) + \sum_{n'=-\infty}^{\infty} b_{2n'+1} m_{kq} \{t - T_k - (2n'+1)T\} \quad (73)$$

Here, $T_k$ is the deviation in the reception time between the signal wave transmitted by station k and the signal wave of the desired station. The local carrier waves on the reception side have the same frequency as Equation (57), and consist of the following cosine wave and sine wave with $\phi$ as arbitrary phases.

$$e_0(t) = \sqrt{2} \, cos(\omega_a t + \phi) \quad (74)$$

$$e_1(t) = \sqrt{2} \, sin(\omega_a t + \phi) \quad (75)$$

If $r_L(T)$ in Equation (72) is multiplied by these local carrier waves, and the multiplied outputs $r_0(t)$ and $r_1(t)$ are multiplied by the reverse spread sequence $m_{0p}(t - 2n'T)$, then the reverse spread outputs $v_{0p}(t - 2n'T)$ and $v_{1p}(t - 2n'T)$ are obtained for the $2n'^{th}$ frame of the desired station. Similarly, if both of the multiplied outputs $r_0(t)$ and $r_1(t)$ are multiplied by $m_{0p}\{t - (2n'+1)T\}$, then the reverse spread outputs $v_{0q}\{t - (2n'+1)T\}$ and $v_{1q}\{t - (2n'+1)T\}$ are obtained. Furthermore, in these symbols shown in the Figure, the frame positions $2n'T$ and $(2n'+1)T$ are omitted.

Since differential encoding is performed according to Equation (69) on the transmission side, the $2n'^{th}$ reverse spread output $u_{0p}(2n')$ shown below is obtained if the product of the $2n'^{th}$ output $v_{0p}$ and the $(2n'-1)^{th}$ output $v_{0q}$ is determined. $u_{1p}(2n')$ is determined by the same method, and the sum of these is $u_p(2n')$.

$$u_{0p}(2n') = v_{0p}(2n') \times v_{0q}(2n'-1)$$
$$u_{1p}(2n') = v_{1p}(2n') \times v_{1q}(2n'-1) \quad \Big\} \cdots (76)$$
$$u_p(2n') = u_{0p}(2n') + u_{1p}(2n')$$

The $(2n'+1)^{th}$ output $u_q(2n'+1)$ is obtained by a similar method. These demodulated output alternating-current components $\tilde{u}_p(2n')$ or $\tilde{u}_q(2n'+1)$, and the frame sequence of the demodulated outputs (base band reception inputs)

$$r_0(t) : r_0(2n'), r_1(t) : r_1(2n') \; ; \; r_0(t) : r_0(2n'+1), r_1(t) : r_1(2n'+1)$$

obtained by means of the carrier wave, are applied to the same processing circuits $s_r$, $s_u$, DF and MFB as in Figure 5(a). In order to simplify the description, n is set equal to $2n'$, the range of the frame numbers stored in $S_r$ and $S_u$ in Figure 5(a) is set as $(2n' \sim 2n'+2\mu)$, $\mu$ is made an even number, and this is reread as $(2n'+\mu)$ - 0. In the processing circuits, the alternating-current components $\tilde{u}_p(0)$ of the $0^{th}$ frame and the alternating-current components $\tilde{u}_p(l)$ or $\tilde{u}_q(l)$ of the $l^{th}$ frame are compared; as a result, the alternating-current components $\tilde{u}_p(j)$ or $\tilde{u}_q(j)$ of other frames with a strong correlation are found, and a difference between $r_0(0)$ and $r_0(j)$ and a difference between $r_1(0)$ and $r_1(j)$ are created based upon Equation (22). Furthermore, from the principle of differential demodulation, similar differences are also taken for adjacent frames, and the final demodulated output $\rho_j$ is obtained by performing the above-described demodulation processing using these differences.

The expected value $z_{n+\mu}$ is determined by applying the above-described final demodulated output $\rho_j$ to the selection and addition circuit $\Sigma$ shown in Figure 5(a), and the estimated value $b_{n+\mu}$ of the binary signal corresponding to the $0(= n + \mu)^{th}$ frame is obtained by performing a hard decision by means of the DEC. The advantage of this system is that it can be used even in cases where detection of the reception phase of the carrier wave is difficult.

Furthermore, the differential frame demodulation system explained in detail with reference to Figures 5(a) and 5(b) can also be applied to the frame synchronization system of a direct sequence spread spectrum communications system.

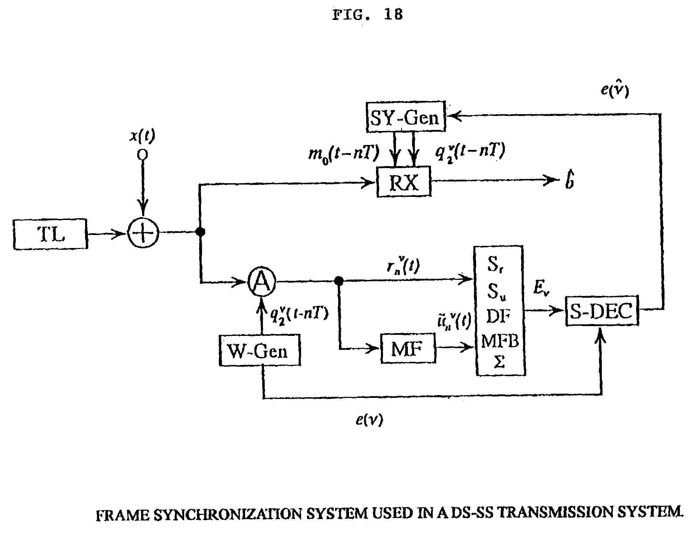

Figure 18 shows one example of such as frame synchronization system. RX in the Figure indicates the receiver shown in Figure 5(a), W-Gen indicates the generator of a hypothetical window frame pulse $q_{v\,2}(t - nT)$, and $q_{v\,2}(t - nT)$ indicates a window pulse with a phase delayed by $T_v = v \, \Delta \, T_c \, (< T)$ from the correct frame phase. ($\Delta \, T_c$ is set at a fraction equal to one over several parts of $T_c$.)

S-DEC indicates a circuit which decides the correct synchronization phase from $\rho_{v\ ll'}$, which will be described later. SY-Gen indicates a circuit which supplies an M sequence $m_0(t - nT)$ synchronized with the correct frame pulse $q^v{}_2(t - nT)$ to the receiver RX. $E_v$ indicates a synchronization evaluation value which will be described later, and $e(v)$ and $e(\hat{v})$ indicate pulses which designate the $v^{th}$ and $\hat{v}^{\ th}$ frame positions.

The above hypothetical window frames are shown in the lower portion of the frame chart in Figure 6. Frame positions which are shifted by $T_v$ are designated by $F_{vn}$, and in DF in Figure 18, differential frames are created by more or less the same method as that illustrated in Figure 5(a). In this case, however, the detection of synchronization positions is the object rather than signal detection; accordingly, differential frames are considered not only between the $0^{th}$ and $j^{th}$ frames, but also generally between the $l^{th}$ and $l'^{th}$ frames. In other words, Equations (77) through (80) are used instead of Equations (19), (22), (23) and (30).

$$\gamma_{ll'} = \frac{\overline{\bar{u}_l(t)\bar{u}_{l'}(t)}}{\sigma_l \sigma_{l'}} \qquad [l, l', \in (-\mu \sim \mu)] \quad \cdots (77)$$

$$d^v_{ll'}(t) = r_l(t) - \gamma'_{ll'} r_{l'}(t) \tag{78}$$

$$\gamma'_{ll'} = \frac{\overline{\bar{u}_l(t)\bar{u}_{l'}(t)}}{\sigma^2_{l'}} \cdots (79)$$

$$\rho^v_{ll'} = \overline{d_{ll'}(t)m_0(t)} \tag{80}$$

Here, since there is no need to determine the polarity of information $b_l$, accordingly, the conditions of Equation (27) are unnecessary.

The number of combinations N of (l, l') used in the determination of the window position v in Equation (80) is as follows:

$$N = {}_{2\mu+l}C_2 \tag{81}$$

Even if $\mu = 10$, N is 210; accordingly, this method is advantageous in that N is large even of the object frame range is small. v is determined, and $|\rho_{v\ ll'}|$ is calculated for the combinations of l and l' using Equation (80); and when both l and l' are varied through the range of $-\mu \sim \mu$, M ($<2\mu$) values are arranged in descending order of magnitude.

$$|\rho^v_{l(0),l'(0)}| > |\rho^v_{l(1),l'(1)}| > \cdots > |\rho^v_{l(M-1),l'(M-1)}| \tag{82}$$

The synchronization evaluation value is defined by the following equation as the sum of the squares of these M correlation values.

$$E_v = \frac{1}{M} \sum_{s=0}^{M-1} (\rho^v_{l(s),l'(s)})^2 \tag{83}$$

If $E_v$ is determined as a function of v, and this evaluation value is compared with an appropriate threshold value, it can be ascertained with a high degree of precision whether or not a synchronized state has been obtained, since the above-described noise cancellation function is provided. More specifically, $E_v$ at the correct synchronization point shows a maximum value with a higher statistical probability than the values at other hypothetical synchronization points. Based upon this function, the S-DEC sends a signal $e(\hat{v})$ designating the estimated synchronization point $\hat{v}$ to the SY-Gen, so that a synchronized state is entered. This function is constantly performed in parallel to the ordinary reception and demodulation operation performed by RX; if this is applied to the three functions of out-of-sync detection, restoration of synchronization and monitoring, an extremely stable synchronization function can be realized.

Furthermore, since the combinations of differential frames are not limited to combinations between 0 and j, but can be expanded to combinations between l and l', the number of combinations of differential frames can be increased from $2\mu$ to $_{2\mu+l}C_2$; accordingly, an operation with fewer errors than signal detection can be realized. Moreover, the principle of the present invention can also be applied as a frame synchronization technique in PSK or FSK systems described later.

In the case of multiplex communications using a PSK modulation system and a time division multiplex (TDMA) or frequency division multiplex (FDMA) system, the system is not affected by interference noise, but is affected by external noise such as white noise and induction noise, etc. The present invention is also effective when applied to such PSK systems, etc. The reason for this is as follows: i. e., since the present invention is a system which utilizes similar noise components between frames, if some of the frame noise in terms of white noise as well is similar to some of the noise of other frames, such similar noise components can be mutually canceled using both frames. Since noise showing white noise characteristics over a long period also contains colored components when portions extracted with a short frame period are investigated by DFT (Discrete Fourier Transform), correlations are generated between frames containing such colored noise, so that the interframe noise cancellation effect can be utilized. Using a simple BPSK modulation system as an example, the transmission signal s(t) and $n^{th}$ frame signal $r_n(t)$ are realized by the following equations in accordance with Equations (6), (7) and (2):

$$s(t) = \sqrt{P} \sum_{n=-\infty}^{\infty} b_n p(t - nT) \tag{84}$$

$$r_n(t) = r_{pn}(t) + x_n(t) \qquad 0 \leq t - nT < T \tag{85}$$

$$r_{pn}(t) = \sqrt{P'} b_n p(t - nT) \tag{86}$$

$$p(t) = \sqrt{2} \sin 2\pi f_0(t) \tag{87}$$

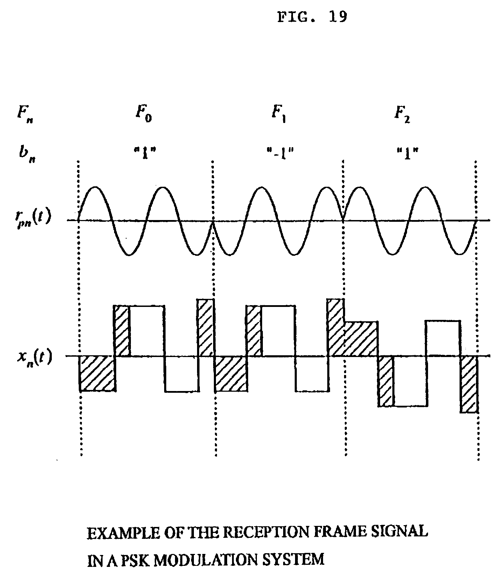

In the case of a BPSK system, $m_0(t)$ in Equations (2) and (6) is the reference signal p(t), and is common regardless of the station number k. Considering the reception signals $r_0 \sim r_2$ constituting three frames $F_n$ (n = 0, 1, 2) in a BPSK system, the signal components $r_{p0} \sim r_{p2}$ and noise components $x_0 \sim x_2$ contained in these signals are shown in Figure 19. The Figure shows a case where $b_n$ (n = 0, 1,2) is 1, -1, 1. Furthermore, assuming that the noise entering frame $F_0$ is $x_0(t)$, then the following case is illustrated:

$$x_1(t) = x_0(t) \tag{88}$$

$$x_2(t) = -x_0(t) \tag{89}$$

For convenience of description, x(t) is shown as a square waveform. In actuality, however, this is a band-restricted waveform. If $r_{p0}(t)$ and $x_0(t)$ in the Figure are compared, the integrated values of the multiplied outputs of $x_0(t)$ and $r_{p0}(t)$ are 0 for the portions of $x_0(t)$ indicated by a white frame, while similar integrated values for the shaded portions adopt negative values, so that in cases where the amplitude of $x_0(t)$ is large, detection of the matched filter wave output (positive value) of only the signal is impeded, thus generating code errors.

However, if x(t) is assumed to be as shown in Equations (88) and (89), and Equation (19) is used, then $\gamma_1 = 1$ and $\gamma_2 = -1$. From this, if differential frames $d_l(t)$ and $d_2(t)$ for $F_0$ are created in accordance with Equation (22), the noise $x_0(t)$ is canceled by $x_1(t)$ or $x_2(t)$, and the amplitude of the reference signal wave p(t) contained in these differential frames is doubled; accordingly, correct detection can be realized using either $d_l(t)$ or $d_2(t)$. The above-described function can be realized by multiplying the waveform p(t) in Equation (87) as the reception side reference signal instead of using the reverse spread based on the M sequence in Figure 5(a); and the remaining functions are the same as described above. Furthermore, for white noise or external noise, the generation of $|\gamma_j| = 1$ cannot be expected; however, the cancellation of noise components can be realized with a higher probability by using chip movement and a chip multiple use system as described above.

Next, in order to apply the above-described chip movement system to a PSK modulation system, etc., $r_n(t)$ is first converted into an impulse train in the demodulation process. When the chip interval ($T_c$) of a CDMA system is caused to correspond to a BPSK system, this constitutes a half-cycle or one cycle of p(t). Here, the half-cycle interval of a sine wave is referred to as a chip for convenience. Specifically,

$$T_{C0} = 1/2f_0 \tag{90}$$

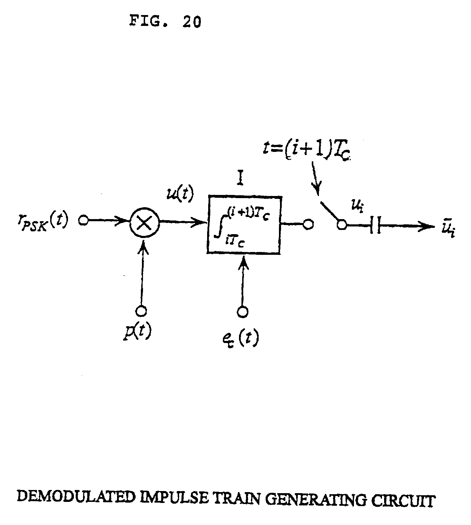

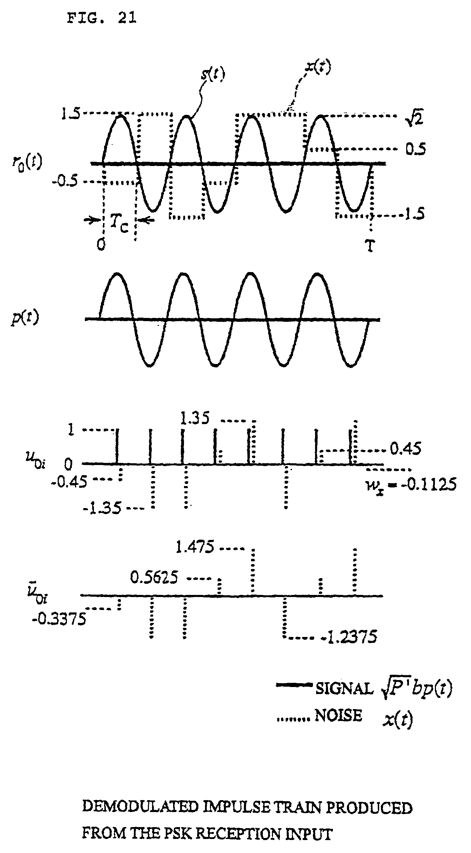

Figure 20 shows a circuit construction used to perform the conversion of the reception waveform into a reception impulse train, as well as chip demodulation. The reception input $r_0(t)$ of the PSK signal shown in the first rank of Figure 21 is multiplied by p(t), and integration similar to that of Equation (40) is performed, thus producing a chip impulse train $r_{0i}$ (i = 0, 1, 2, ... L-1); in this case, since demodulation has already been accomplished by multiplication with p(t), $r_{0i} = u_{0i}$.

Figure 21 shows an example of the $0^{th}$ reception input frame $r_0(t)$, and the impulse train of the demodulated output alternating-current components determined from this. In the Figure, $r_0(t)$ is separated into the constituent noise x(t) and signal s(t) = $\sqrt{P'}bp(t)$ in order to facilitate understanding. (In actuality, the linearly added waveform of both is $r_0(t)$.) p(t) is the reference signal; in the Figure, for the sake of simplicity, a case is illustrated in which $\sqrt{P'}b$ = 1, and a signal component equal to p(t) is received. Furthermore, for convenience, a square wave of chip interval units is used as noise. (In actuality, this has a band-restricted waveform.) The result of multiplication of $r_0(t)$ by p(t) and integration for each chip interval is shown as $u_{0i}$ separated into signal components (solid line) and noise components (dotted line) in order to facilitate understanding. The signal components in $u_{0i}$ are all impulses of equal amplitude and uniform polarity; accordingly, these do not contribute to the alternating-current components $\tilde{u}_{0i}$. The mean value of the noise components in $u_{0i}$ is the correlation value $w_x$ with n omitted in Equation (13); this leads to code errors. Accordingly,

$$\tilde{u}_{0i} = u_{0i} - w_x - \sqrt{P'}b \tag{91}$$

This impulse train (dotted lines of $u_{0i}$ and $\tilde{u}_{0i}$) consists of components corresponding to $u_{0i}$ and $\tilde{u}_{0i}$ shown in Figure 9(a). In Figure 21, however, p(t) consists of 4 cycles; accordingly, L = 8. A similar alternating-current component impulse train $\tilde{u}_{li}$ can be determined for the n = l (l ≠ 0, l ∈ -μ ~ μ)$^{th}$ frame by the same method. Judging from this, similar-noise frame pairs can be created by chip movement and multiple use in the same manner as in the case of CDMA; furthermore, differential frames can be created from these, so that noise can be canceled. As a result, information of the $0^{th}$ frame can be detected with a high degree of precision.

This principle can be widely used in phase modulation systems such as 4-phase PSK or QPSK, etc. This principle can also be applied to a coherent FSK system; however, a portion of the non-coherent demodulation process described next must be used in combination.

Next, an example of application to a non-coherent FSK modulation system will be described. In the demodulation of the M-value FSK signal indicated by the following equations, it is necessary to extract the frequency components of the reception input regardless of the phase.

$$
\begin{aligned}
r_{FSK}(t) &= \sqrt{2P'}\cos(2\pi f_m t + \theta_m) \\
f_m &= f_0 + m\Delta f \quad (m = 0, 1, 2 \cdots M-1) \\
\Delta f &= 1/T
\end{aligned}
\left.\vphantom{\begin{aligned}&\\&\\&\end{aligned}}\right\} \cdots (92)
$$

Here, $f_m$ indicates frequency components in a mutually orthogonal relationship, and $\theta_m$ indicates a non-coherent FSK signal with an arbitrary phase. Accordingly, this may be viewed as a random variable with respect to m. In order to achieve this purpose, one frame $r_{FSK}(t)$ of the FSK signal is first viewed as a periodic function with a period of T, and the auto-correlation function is determined from the following equation.

$$\phi(\tau) = \frac{1}{T} \int_{-T/2}^{T/2} r_{FSK}(t)r_{FSK}(t+\tau)dt \tag{93}$$

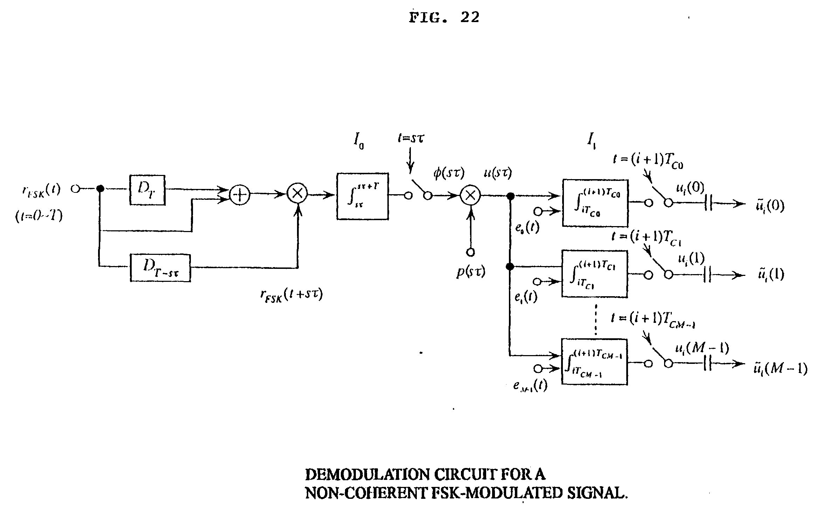

In the actual processing, $\tau$ is treated as a scattered value $s_\tau$ (s = 0, 1, 2 ..., $\tau$ << T). $\phi(\tau)$ and the reverse spread output alternating-current components $\tilde{u}_i(m)$ of the $m^{th}$ chip input are determined by the circuit construction shown in Figure 22. $e_0(t)$, $e_l(t)$, ... $e_{M-l}(t)$ are control pulses which indicate the integration time. In the same Figure, the input is the reception FSK signal for 1 frame ($t = 0 \sim T$). Furthermore, $I_0$ and $I_2$ are integrators, and $D_T$ and $D_{T-\tau}$ are delay circuits with respective delays of T seconds and (T -$\tau$) seconds ($\tau \le T$). (In the Figure, this is shown as $\tau \to s_\tau$.)

The signal components of frequency $f_m$ contained in $r_{FSK}(t)$ have the same frequency as in the conversion process to $\phi(\tau)$, and are converted into cosine wave components with an amplitude of P'. Accordingly,

$$p_T(\tau) = \sum_{m=0}^{M-1} p_m(\tau)$$

$$p_m(\tau) = \sqrt{2} \cos 2\pi f_m \tau$$

$$\left. \begin{array}{c} \\ \\ \end{array} \right\} \cdots (94)$$

are used as reference signals to detect these components. Accordingly, all of the components contained in the M signal components in $\phi(\tau)$ are included in $p_T(\tau)$. As shown in Figure 22, if the multiplied output $u(\tau)$ of $\phi(\tau)$ and $p_T(\tau)$ is integrated with respect to the chip period

$$T_{cm} = 1/2f_m \tag{95}$$

corresponding to the m$^{th}$ frequency component, and sampling is performed at the sampling points $t = (i + 1)T_{cm}$, a multiplied output impulse train $\{u_i(m)\}$ and the associated alternating-current components $\{\tilde{u}_i(m)\}$ are obtained. (This function is also necessary in the case of coherent FSK modulation.) As a result, M integrators $I_1$ are necessary. In the case of M-value FSK modulation, one frequency among the M frequencies is contained as a signal in the auto-correlation function $\phi_0(\tau)$ of the 0$^{th}$ frame. Here, a case in which the presence or absence of one of the transmission signal components, e. g., $f_m$, is to be ascertained is considered. The correlation coefficients $\gamma_l(m)$ between the multiplied output alternating-current components $\tilde{u}_{0i}(m)$ of $\phi_0(\tau)$ and $p_m(\tau)$ and the similar alternating-current components $\tilde{u}_{li}(m)$ of the l($\ne$ 0)$^{th}$ frame are determined, and the differential frames $d_j(m)$ of Equation (22) are created as the difference between $\phi_0(\tau)$ and $\phi_l(\tau)$ for frames (l = j) in which the value of the coefficient is large. In this case, the signal components contained in $\phi_0(\tau)$ are designated as $f_{m'}$, and the correlation output $w_s(m)$ corresponding to the frequency $f_m$ is given by the following equation by integrating $u_i(m)$ shown in Figure 22 over the frame period T.

$$w_s(m) = \frac{1}{T} \int_0^T \phi_0(\tau) p_m(\tau) d\tau = \frac{\sqrt{2} P'}{T} \int_0^T \{\cos 2\pi f_m t\}^2 = \frac{P'}{\sqrt{2}} \quad (m' = m)$$

$$= 0 \qquad (m' \ne m)$$

$$\left. \begin{array}{c} \\ \\ \end{array} \right\} \cdots (96)$$

From this, $w_s(m) > 0$. Now, with the signal components $f_{m'}$ unknown, and **m** fixed, the correlation outputs $\rho_j(m)$ of the differential frames $d_j(m)$ and the single reference signal $p_m(\tau)$ are determined. [Since $w_s(m) > 0$, the values of $\rho_j(m)$ are generally positive.] The maximum value $z_m(m)$ among the correlation outputs for numerous similar differential frames, or the mean value $z_0(m)$ of the correlation outputs $\rho_J(m)$ between each of a plurality of differential frames of differential frames j = J where $\rho_j(m) > \rho_{th}$, and $p_m(\tau)$ is determined. Similar processing is performed for other values of m, and the value showing a maximum value among these is taken as being $z_m(\hat{m})$ or $z_0(\hat{m})$. In such a case, the detected frequency is given by the following equation:

$$f_{\hat{m}} = f_0 + \hat{m}\Delta f \tag{97}$$

Here, from Equation (96) and the principle of differential frame detection, the probability that $f_{\hat{m}} = f_{m'}$ can be increased.

Thus, the demodulation of an M-value FSK non-coherent transmission system can be realized with a high degree of precision by creating differential frames that cancel frame noise. Furthermore, as in the case of use in CDMA, the characteristics can be further improved by the movement and selected use of chip impulses.

As described above, it is clearly shown that the present invention can be applied to PSK and non-coherent FSK modulation as well. In the case of an orthogonal frequency division multiplex modulation (OFDM) system, it is necessary to detect numerous orthogonal frequency components in the demodulation process, as in the case of the PSK and FSK modulation. Accordingly, in the case of OFDM modulation as well, high-precision detection of transmitted information can be realized by determining the differences between certain frames and other frames, thus producing differential frames that cancel noise, and performing demodulation and detection of these differential frames using the above-described principle.

As described above, the present invention is a system which increases the SN ratio of reception and demodulation using the improving functions of a noise cancellation effect of differential frames produced using alternating-current components determined in the demodulation or spread process, and a noise similarity effect obtained by the movement of chip impulses or partial waveforms constituting the frames. If this system is applied to a CDMA communications system using DS-SS modulation, the SN ratio following demodulation processing can be conspicuously increased compared to the SN ratio obtained by matched filter wave demodulation in a conventional system. Accordingly, the present invention has a superior effect in terms of being able to improve the error rate. Furthermore, even if the present invention is applied to the frame synchronization of CDMA communications, the frame positions can be detected at a high SN ratio; accordingly, the present invention is effective. In addition, the present invention has a canceling effect in the case of white noise and external noise as well. Accordingly, the present invention can also improve the demodulation SN ratio in the case of base band pulse modulation systems and band transmission type modulations systems such as PSK, FSK, QAM and OFDM, etc.; accordingly, the present invention is effective in such cases.

## Claims

1. A frame waveform mutual correction type data signal demodulation system in which a carrier wave or spread sequence is modulated by means of binary or multi-value information and transmitted for each symbol frame period, and each reception frame waveform received on a reception side is demodulated and detected so as to restore said information, said system being characterized in that a differential frame is created by multiplying and adding a correction coefficient with at least one of two frames designated as a $0^{th}$ frame and a $j^{th}$ frame so that noise components contained in the $0^{th}$ frame waveform and the $j^{th}$ frame waveform are caused to cancel each other, and a transmission information is restored by subjecting a transmission information component contained in said differential frame to correlation detection.

2. A frame waveform mutual correction type data signal demodulation system according to Claim 1, characterized in that a reception chip waveform formed by dividing a reception frame waveform into a plurality of chip intervals, or reception chip impulses formed by partially demodulating said reception chip waveform, are created, said reception chip waveform or reception chip impulses are moved to another chip position or a plurality of other chip positions while conditions which hold reception frame signal components are maintained so as to create corrected reception frames, and a communication information is detected by the means of Claim 1 using said corrected reception frames.

3. A frame waveform mutual correction type data signal demodulation system according to Claim 1, characterized in that respective multiplied-output alternating-current components of each of a pair of reception frames with a reference signal wave are obtained in a reception-side correlation detection process, a mutual correlation coefficient of said pair of multiplied-output alternating-current components is determined, a differential frame waveform is created by adding a waveform created by multiplying at least one reception frame of said pair of reception frames by a correction coefficient produced based upon said mutual correlation coefficient, and another reception frame, and then a reference signal wave component of a desired station contained in said differential frame is detected by correlation detection.

4. A frame waveform mutual correction type data signal demodulation system according to Claim 3, characterized in that the $0^{th}$ reception frame is used as a reference, the $l^{th}$ reception frame which is paired with this $0^{th}$ reception frame is extracted, a mutual correlation coefficient between said multiplied-output alternating-current components of both frames is determined, a differential frame corresponding to the $l = j^{th}$ reception frame in which the absolute value of this value is a large value is created, an output obtained by correlation detection of a reference signal wave component of a desired station contained in said differential frame is determined, similar correlation detection outputs determined between the $0^{th}$ reception frame and other reception frames forming pairs with the $0^{th}$ reception frame are determined in order, and the transmitted information is detected by ascertaining a polarity of a maximum value or mean value of amplitudes of the detected outputs

5. A frame waveform mutual correction type data signal demodulation system according to Claim 4, characterized in that the $0^{th}$ reception frame is used as a reference, a multiplied-output alternating-current component of the spread sequence of a desired station and said differential frame created for the $l^{th}$ reception frame forming a pair with the

$0^{th}$ reception frame is compared with similar multiplied-output alternating-current components of other differential frames; an output of said correlation detection of said reference signal wave component of said desired station contained in said differential frame corresponding to the $L = U^{th}$ reception frame in which said value is a small value is determined, and the transmitted information is detected by ascertaining a polarity of a maximum value or mean value of an amplitudes of detected outputs.

6. A frame waveform mutual correction type data signal demodulation system according to Claim 4, characterized in that in a case where a correlation coefficient between the multiplied-output alternating-current component depending on the spread sequence of the desired station in said differential frame created for the $0^{th}$ reference reception frame and similar multiplied-output alternating-current components of other differential frames exceeds a predetermined threshold value, a double differential frame is created by multiplying said correction coefficient by at least one of said differential frames and adding both frames, and the transmitted information is detected by correlation detection of the reference signal component of the desired station contained in said double differential frame.

7. A frame waveform mutual correction type data signal demodulation system according to Claims 1 through 6, characterized in that a means is added which alters the noise components contained in said reception frames by moving the respective chip waveforms of the reception frames constructed from a plurality of chip signals and the chip noise contained in said chip intervals, or the respective chip impulse outputs obtained by integrating the respective chip waveforms, to a separate chip position or plurality of chip positions within the same frames under conditions which cause no change in signal components contained in said reception frames, and the transmitted information is detected using demodulated components or reverse-spread output alternating-current components of the $0^{th}$ reception frame and the $I^{th}$ reception frame forming a pair with the $0^{th}$ reception frame so that a noise canceling effect of the differential frame produced by multiplying the correction coefficient by one of said pair of reception frames is heightened.

8. A frame waveform mutual correction type data signal demodulation system according to Claims 1 through 7, characterized in that effects of interference noise can be respectively alleviated in a coherent demodulation process of in-phase or orthogonal frames transmitted by the desired station on the reception side by using a system in which a in-phase/orthogonal frame interleaved transmission signal is produced by producing even-numbered symbol frames by modulating the reference carrier wave by means of the transmitted information, and producing odd-numbered symbol frames by modulating an orthogonal reference carrier wave which has a phase that is orthogonal to said reference carrier wave.

9. A frame waveform mutual correction type data signal demodulation system according to Claim 3, characterized in that a synchronization function is provided in which in a state that a synchronization of a symbol frame is off, a correlation detection according to the reference signal component of the desired station is performed for a differential frame determined from a pair of hypothetical reception frames matching a hypothetical window frame preset on the reception side for a reception input received within a predetermined period of time, a power of the correlation detection output is determined, the mean value of the power is determined based upon correlation-detection power values determined from numerous other similar reception frame pairs, the hypothetical window is shifted to another position, a similar mean value of correlation-detection power values is determined, and a synchronization position of the symbol frame is determined from a shifted position of said hypothetical window frame that shows a maximum value among said mean values.

10. A frame waveform mutual correction type data signal demodulation system according to Claim 4 or 5, characterized in that the respective reception wave multiplied-output alternating-current components are obtained by multiplication of each of a pair of reception frames with the reference signal wave in the correlation detection process on the reception side, and a combination differential frame, in which power values of the $0^{th}$ frame and the $I^{th}$ frame which is combined with the $0^{th}$ frame are equal to each other, is selected.

11. A frame waveform mutual correction type data signal demodulation system according to Claim 8, characterized in that a part of effects of interference noise is eliminated on the reception side by the use of an in-phase/orthogonal frame alternate positioning type transmission signal in which base band signals of even-numbered frames are formed as in-phase waves with spread sequence, while base band signals of odd-numbered frames are formed as orthogonal waves with respect to spread sequence.

12. A frame waveform mutual correction type data signal demodulation system wherein a system according to any one of Claims 1 through 7 is employed in a transmission system which uses a base band pulse modulation (PCM) system, or a band-pass type modulation system such as PSK, DPSK, FSK or OFDM, etc., characterized in that a differential frame is produced by multiplying a correction coefficient, which is produced based upon the correlation coefficient of multiplied-output alternating-current components based on the reference signal wave for a pair of reception frames, by at least one of reception frames, so that a transmitted information is detected by demodulation detection of said differential frame.

13. A frame waveform mutual correction type data signal demodulation system according to Claim 12, characterized in that auto-correlation functions of the reception frames and auto-correlation function of the reference signal wave are processed as the reception frames and reference signal wave, thus detecting the transmitted information..

14. A frame waveform mutual correction type data signal demodulation system in which a carrier wave or spread sequence is modulated by means of binary or multi-value information and transmitted for each symbol frame period, and each reception frame waveform received on a reception side is demodulated and detected, thus restoring said information, characterized in that said system comprises:

a step of taking logical products of reception frame waveforms and reception frame separating pulses, obtaining $(2\mu + 1)$ signals $r_n(t)$ for each reception frame, and accumulating said signals;
a step of multiplying spread sequence used in modulation on a transmission side with said reception frame waveforms so as to obtain multiplied outputs $u_n(t)$;
a step of obtaining alternating-current components $\tilde{u}_n(t)$ of said multiplied outputs $u_n(t)$;
a step of accumulating $(2\mu + 1)$ of said signals $r_n(t)$ and said alternating-current components $\tilde{u}_n(t)$ for each reception frame;
a step of producing $2\mu$ differential frames $d_j$ of $(n + \mu)^{th}$ signal $r_n(t)$ and $(n + \mu + j)^{th}$ signal $r_j(t)$;
a step of obtaining correlation outputs of said $2\mu$ differential frames and the spread sequence of a desired station;
a step of calculating, from said correlation outputs, expected values of the spread sequence components of said desired station contained in the reception frames; and
a step of performing hard determination processing of said expected values;
thus demodulating a reception signal by these means.

FIG. 1

FIG. 2

FIG. 3

FIG. 4

FRAME DISPLAY

SPREAD SERIES $m_1(t)$
(IMPULSE)

BINARY TRANSMISSION $b$
DATA

TRANSMISSION FRAME $s_1(t)$
(IMPULSE)

TRANSMISSION FRAME $s(t)$
(SQUARE WAVE)

WAVE FORMS OF SPREAD SERIES AND TRANSMISSION FRAME
IN DIRECT SPREAD TYPE SPECTRUM SPREAD MODULATION SYSTEM

EP 0 939 499 A1

EP 0 939 499 A1

FIG. 5

(a)  BLOCK DIAGRAM OF A TRANSMITTER-RECEIVER
USED IN A SPREAD SPECTRUM SYSTEM

(b)

FIG. 6

FRAME DISPLAY

$s(t)$

| $F_0$ | $F_1$ | $F_2$ | $F_3$ | $F_4$ |
|---|---|---|---|---|
| $b_0 m_0$ | $b_1 m_0$ | $b_2 m_0$ | $b_3 m_0$ | $b_4 m_0$ |

$x(t)$

$\leftarrow T_1 \rightarrow$
$\leftarrow T_2 \rightarrow$

$x_{10} m_1$ — $x_{11} m_1$ — $x_{12} m_1$ — $x_{13} m_1$

$x_{10} m_2$ — $x_{11} m_2$ — $x_{12} m_2$ — $x_{13} m_2$

$\leftarrow T_{k-1} \rightarrow$
$\leftarrow T_k \rightarrow$

$x_{k-10} m_{k-1}$ — $x_{k-11} m_{k-1}$ — $x_{k-12} m_{k-1}$ — $x_{k-13} m_{k-1}$

$x_{k0} m_k$ — $x_{k1} m_k$ — $x_{k2} m_k$ — $x_{k3} m_k$

HYPOTHETICAL
WINDOW DISPLAY

$T^\nu \rightarrow$

| $F_0^\nu(p)$ | $F_1^\nu(q)$ | $F_2^\nu(p)$ | $F_3^\nu(q)$ | $F_4^\nu(p)$ |
|---|---|---|---|---|

SIGNAL FRAME SERIES AND FRAME SERIES

OF INTERFERENCE NOISE GROUPS

32

FIG. 7

PERIODIC STEADY-STATE CHARACTERISTICS OF INTERFERENCE NOISE

EP 0 939 499 A1

EP 0 939 499 A1

FIG. 8

FIG. 9

(a)                    (b)

FIG. 10

$h=[i_-(r_0)/i_-(r_I)]$

$\overline{h}=[i_-(r_0)/i_+(r_I)]$

FIG. 11

FIG. 12

38

FIG. 13

BLOCK DIAGRAM OF ALTERNATE POSITIONING TYPE
MODULATION/DIFFERENTIAL FRAME DEMODULATION SYSTEM
FOR IN-PHASE/ORTHOGONAL CARRIER WAVE FRAMES

EP 0 939 499 A1

39

FIG. 14

SIGNALS AND FRAME SERIES OF INTERFERENCE NOISE GROUPS
IN AN IN-PHASE/ORTHOGONAL FRAME ALTERNATE POSITIONING SYSTEM

FIG. 15

PERIODIC STEADY-STATE CHARACTERISTICS OF INTERFERENCE NOISE IN AN IN-PHASE/ORTHOGONAL FRAME ALTERNATE POSITIONING MODULATION SYSTEM.

FIG. 16

(a) IN-PHASE/ORTHOGONAL WAVE FORM OF ONE CHIP IMPULSE

(b) IN-PHASE/ORTHOGONAL WAVE FORM OF M SERIES

EXAMPLE OF A BASE-BAND IN-PHASE/ORTHOGONAL
SQUARE WAVE SPREAD SERIES

FIG. 17

ALTERNATE POSITIONING TYPE MODULATION/DIFFERENTIAL
FRAME DEMODULATION SYSTEM FOR IN-PHASE/ORTHOGONAL
BASE-BAND FRAMES.

EP 0 939 499 A1

FIG. 18

FRAME SYNCHRONIZATION SYSTEM USED IN A DS-SS TRANSMISSION SYSTEM.

EP 0 939 499 A1

FIG. 19

EXAMPLE OF THE RECEPTION FRAME SIGNAL
IN A PSK MODULATION SYSTEM

EP 0 939 499 A1

FIG. 20

$$t=(i+1)T_c$$

$$r_{PSK}(t) \xrightarrow{\quad} \bigotimes \xrightarrow{\;u(t)\;} \boxed{\int_{iT_c}^{(i+1)T_c}} \xrightarrow{\quad} \quad \xrightarrow{\;u_i\;} \quad \xrightarrow{\quad} \bar{u}_i$$

$$p(t)$$

$$c_i(t)$$

DEMODULATED IMPULSE TRAIN GENERATING CIRCUIT

FIG. 21

DEMODULATED IMPULSE TRAIN PRODUCED
FROM THE PSK RECEPTION INPUT

FIG. 22

**DEMODULATION CIRCUIT FOR A
NON-COHERENT FSK-MODULATED SIGNAL.**

EP 0 939 499 A1

## INTERNATIONAL SEARCH REPORT

| International application No. |
|---|
| PCT/JP98/01141 |

**A. CLASSIFICATION OF SUBJECT MATTER**
Int.Cl$^6$ H04B1/707, H04B1/10, H04J13/00, H04L27/18

According to International Patent Classification (IPC) or to both national classification and IPC

**B. FIELDS SEARCHED**

Minimum documentation searched (classification system followed by classification symbols)
Int.Cl$^6$ H04B1/707, H04J13/00, H04L27/18

Documentation searched other than minimum documentation to the extent that such documents are included in the fields searched
Jitsuyo Shinan Koho          1940-1998
Kokai Jitsuyo Shinan Koho    1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Technical Research Report of IEICE, Vol. 96, No. 591, March 1997 (Tokyo), Yoshikazu Takeyasu, Katsuyoshi Koyanagi, Takeo Murata, Shinya Matsufuji, | 1, 3, 8, 11, 12 |
| A | "In-Phase-Orthogonal Series Alternate Arrangement CDMA Synchronizing Method-Interframe Noise Cancelling Synchronization-(in Japanese)" p.31-36 | 2, 4-7, 9, 10, 13, 14 |
| A | JP, 9-116461, A (Katsuyoshi Koyanagi, Naoki Suehiro, Toyo Communication Equipment Co., Ltd.), May 2, 1997 (02. 05. 97) & EP, 798871, A1 | 1-14 |
| A | JP, 7-147552, A (Katsuyoshi Koyanagi, Toyo Communication Equipment Co., Ltd.), June 6, 1995 (06. 06. 95) & EP, 665663, A1 | 1-14 |

☐ Further documents are listed in the continuation of Box C.  ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| June 10, 1998 (10. 06. 98) | June 23, 1998 (23. 06. 98) |

| Name and mailing address of the ISA/ <br> Japanese Patent Office | Authorized officer |
|---|---|
| Facsimile No. | Telephone No. |

Form PCT/ISA/210 (second sheet) (July 1992)